(19) Europäisches Patentamt
European Patent Office
Office européen des brevets

(11) Numéro de publication: **0 235 049**
**B1**

(12) # FASCICULE DE BREVET EUROPEEN

(45) Date de publication du fascicule du brevet: **11.07.90**

(51) Int. Cl.$^5$: **C 08 L 83/04,** C 08 K 5/00, C 08 K 5/57

(21) Numéro de dépôt: **87420007.4**

(22) Date de dépôt: **08.01.87**

(54) **Système catalytique à l'étain pour composition organopolysiloxane durcissable dès la température ambiante.**

(30) Priorité: **09.01.86 FR 8600404**

(43) Date de publication de la demande:
**02.09.87 Bulletin 87/36**

(45) Mention de la délivrance du brevet:
**11.07.90 Bulletin 90/28**

(84) Etats contractants désignés:
**AT BE CH DE ES FR GB GR IT LI LU NL SE**

(56) Documents cités:
**EP-A-0 147 323**
**US-A-3 708 467**
**US-A-4 517 337**
**US-A-4 554 310**

(73) Titulaire: **RHONE-POULENC CHIMIE**
**25, quai Paul Doumer**
**F-92408 Courbevoie Cédex (FR)**

(72) Inventeur: **Millet, Claude**
**14, rue Jean de la Bruyère**
**F-69800 Saint-Priest (FR)**

(74) Mandataire: **Seugnet, Jean Louis et al**
**RHONE-POULENC INTERSERVICES Service Brevets Chimie Centre de Recherches de Saint-Fons B.P. 62**
**F-69192 Saint-Fons Cédex (FR)**

**Le dossier contient des informations techniques présentées postérieurement au dépôt de la demande et ne figurant pas dans le présent fascicule.**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

De nombreux composés de l'étain ont déjà été proposés comme catalyseur de réticulation de composition polyorganosiloxanes et en particulier de compositions RTV (compositions vulcanisables à température ambiante) à un seul ou à deux emballages autrement dit mono ou bicomposantes.

Les composés les plus utilisés sont les carboxylates d'étain tels que le monooléate de tributyltain, l'éthyl-2 hexanoate d'étain ou les dicarboxylates de dialkylétain tels que le dilaurate de dibutylétain et le diacétate de dibutylétain (voir l'ouvrage de Noll "Chemistry and technology of silicones" page 337, Académic Press, 1968 — 2ème édition).

Selon le brevet US 3 186 963, on propose comme catalyseur à l'étain le produit de la réaction d'un sel d'étain, en particulier le dilaurate de dibutylétain, sur du polysilicate d'éthyle.

Selon le brevet US 3 862 919, on propose comme catalyseur à l'étain le produit de la réaction d'un dialkyldialcoxysilane sur un carboxylate d'étain.

Selon le brevet belge 842 305, on propose comme catalyseur le produit de la réaction d'un silicate d'alkyle ou d'un alkyltrialcoxysilane sur le diacètate de dibutylétain.

Selon le brevet US—A—3 708 467 on décrit un système catalytique formé d'un mélange de certains sels d'étain avec un chelate de titane spécifique, dans une composition mono-composante.

Enfin dans la demande de brevet européen EP—A—147 323 et dans les brevets US—A—4 517 337 et US—A—4 554 310 on décrit l'utilisation de bis(β-dicétone) de diorganoétain pour la réticulation de compositions mono-composantes neutres (US—A—4 517 337 et US—A—4 554 310) ou pour des compositions mono- et bi-composantes (EP—A—147 323).

Bien que EP—A—147 323 ait permis de faire un progrès important dans la recherche d'un catalyseur à l'étain utilisable à la fois pour les compositions mono- et bi-composantes, il est apparu que les bis(β-dicétonate) de diorganoétain présentent un temps de prise à coeur un peu lent en particulier pour les compositions bi-composantes.

De façon générale pour les compositions mono-composantes se pose essentiellement le problème de la stabilité au stockage et de la conservation des propriétés physico-chimiques (extrudabilité, coulabilité, temps de prise) de la composition et conservation de ces mêmes propriétés du réticulat (propriétés mécaniques, dureté, allongement, résistance à la déchirure, adhérence, etc . . . . .).

L'homme de métier recherche un catalyseur qui réticule très rapidement à l'humidité de l'air et en surface mais qui procure en même temps une réticulation à coeur la plus complète possible, et qui soit actif à faible dose tout en minimisant les réactions de dégradations du réticulat, inhérentes à la présence d'étain.

Pour les compositions bi-composantes il existe les mêmes problèmes que pour les compositions mono-composantes au niveau du réticulat obtenu, mais en outre le temps de mise en oeuvre, c'est-à-dire le temps pendant lequel la composition peut être utilisée après mélange sans durcir, doit être suffisamment long pour permettre son utilisation mais suffisamment court pour obtenir un objet moulé manipulable au plus tard 24 heures après sa fabrication.

Ce catalyseur doit donc permettre d'obtenir un bon compromis entre le temps d'utilisation du mélange catalysé et le temps au bout duquel, l'objet moulé est manipulable. En outre le catalyseur doit conférer au mélange catalysé un temps d'étalement qui ne varie pas en fonction de la durée du stockage.

En outre les propriétés dynamométriques des réticulats, en particulier la dureté et la résistance à la déchirure doivent rester stables au cours du stockage.

Un but de la présente invention, en vue de rationaliser la production industrielle des compositions élastomères organopolysiloxane mono- et bi-composantes est de proposer un système catalytique utilisable à la fois dans la réticulation des compositions élastomères mono- et bi-composantes.

Un autre but de la présente invention est de proposer un système catalytique du type ci-dessus qui réponde à la fois aux contraintes communes de conservation, de mise en oeuvre et de réticulation des deux types de compositions élastomères tout en répondant aux problèmes spécifiques posés par chacune d'elle sans pour cela introduire des effets secondaires néfastes au niveau de chacune d'elle.

Ces but et d'autres sont atteints par la présente invention qui concerne en effet des compositions organopolysiloxanes comprenant d'une part une base apte à durcir en élastomère silicone dès la température ambiante et d'autre part un catalyseur de durcissement appartenant à la classe des dérivés organiques de l'étain, ce catalyseur étant obtenu par mélange d'un bis(β-dicétonate) de diorganoétain avec un dérivé organique de l'étain de valence IV exempt de fonction β-dicétonato. Ce dernier renferme au moins un atome d'étain donc chacun de ces atomes porte 2 radicaux organiques liés par une liaison Sn—C, les deux autres valences étant satisfaites au moyen de radicaux choisis parmi des radicaux organiques ou inorganiques liés par une liaison Sn—O, ou Sn—S, des atomes d'oxygène, d'halogène et des radicaux hydroxy.

Les bis(β-dicétonate) de diorganoétain préféres sont des composés chelatés répondant à la formule:

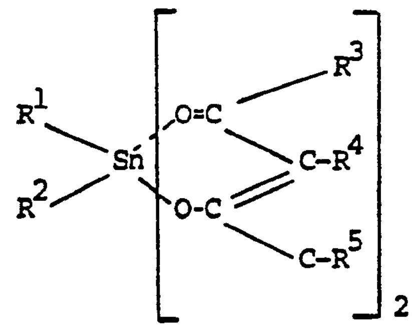

Les symboles $R^1$ et $R^2$, identiques ou différents, représentent des radicaux organiques en $C_1$—$C_{12}$.

Ces radicaux organiques englobent plus spécialement:

les radicaux alkyles, halogénés ou non, en $C_1$—$C_{12}$ tels que les radicaux méthyle, éthyle, propyle, isopropyle, butyle, isobutyle, butyle secondaire, tertiobutyle, pentyle, hexyle, heptyle, éthyl-2 hexyle, octyle, décyle, dodecyle, chlorométhyle, dichloro-2,5 éthyle.

les radicaux alcényles en $C_2$—$C_8$, halogénés ou non, tels que les radicaux vinyle, allyle, méthallyle, butène-2 yle, pentène-2 yle, octène-3 yle, fluoro-5 pentène-2 yle.

les radicaux cycloalkyles halogénés ou non en $C_4$—$C_8$, tels que les radicaux cyclopentyle, cyclohexyle, méthylcyclohexyle, cyclooctyle, 3—4 dichlorocyclohexyle, 2,6 dibromocycloheptyle.

les radicaux aryles mononucléaires, halogénés ou non, en $C_6$—$C_{10}$ tels que les radicaux phényle, tolyle, xylyle, cumenyle, chlorophényle, dichlorophényle, trichlorophényle, difluorophényle, trifluorométhylphényle.

les radicaux arylalkyles mononucléaires halogénés ou non, en $C_7$—$C_{12}$, tels que radicaux benzyle, phényléthyle, phénylpropyle, trifluorométhylphényl-éthyl.

les radicaux alcoxy en $C_1$—$C_5$, halogénés ou non, tels que les radicaux méthoxy, éthoxy, propoxy, butoxy, pentoxy, chlorométhoxy, dichloroéthoxy, dichloropentoxy.

les radicaux acyloxy en $C_1$—$C_6$ tels que les radicaux acétoxy, propanoyloxy, butanoyloxy, pentanoyloxy, hexanoyloxy.

Les symboles $R^3$ et $R^5$, identiques ou différents, ont la même signification que $R_1$ et $R_2$ c'est-à-dire des radicaux organiques en $C_1$—$C_{12}$ et peuvent représenter en outre des atomes d'hydrogène, des radicaux cyanoalkyle ayant la partie alkyle en $C_2$—$C_4$, des radicaux cyanoalcoxy ayant la partie alcoxy en $C_1$—$C_5$.

A titre illustratif de radicaux cyanoalkyles, peuvent être cités les radicaux cyanoéthyle, cyanopropyle, cyanobutyle, et de radicaux cyanoalcoxy peuvent être cités les radicaux cyanoéthoxy, cyanopropoxy.

Le symbole $R^4$ représente l'atome d'hydrogène, un radical hydrocarboné, halogéné ou non, en $C_1$—$C_8$.

Ce radical englobe plus spécialement les radicaux alkyles, halogénés ou non, tels que les radicaux méthyle, éthyle, propyle, butyle, hexyle, octyle, et les radicaux aryles mononucléaires, halogénés ou non tels que les radicaux phényle, tolyle, chlorophényle, dichlorophényle.

En outre $R^4$, en se couplant avec $R^5$, représente un radical hydrocarboné cyclique en $C_5$—$C_{12}$, substitué ou non par des radicaux chloro, nitro, cyano.

A titre illustratif de ces cycles peuvent être cités ceux de formules:

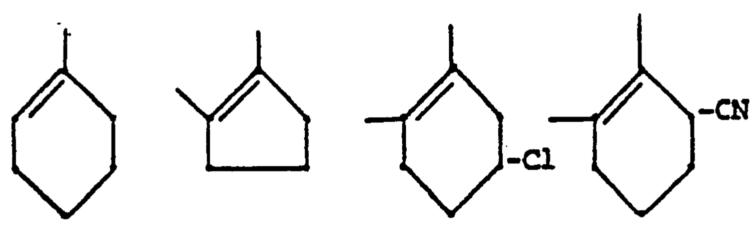

Le bis(β-dicétonate) de diorganoétain est un dérivé organique de l'étain décrit dans la littérature chimique.

Ces diverses méthodes de fabrication figurent en particulier dans les brevets américains US—A—3 055 845 et US—A—4 517 337 et dans la demande de brevet européen EP—A—147 323, dans l'ouvrage "Metal β-dicétonates and Allied Derivates" de R. C. MEHROTRA, R. BOHRA et D. P. GAUR, publié en 1978 par Academic Press et dans l'ouvrage "The Chemistry of organotin compounds" de R. C. POLLER, publié en 1970 également par Academic Press, les publications ci-dessus étant citées comme références.

Comme exemple concrets de ces dérivés sont proposés ceux de formules:

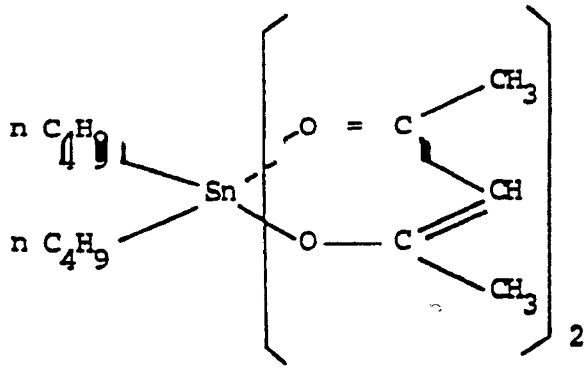

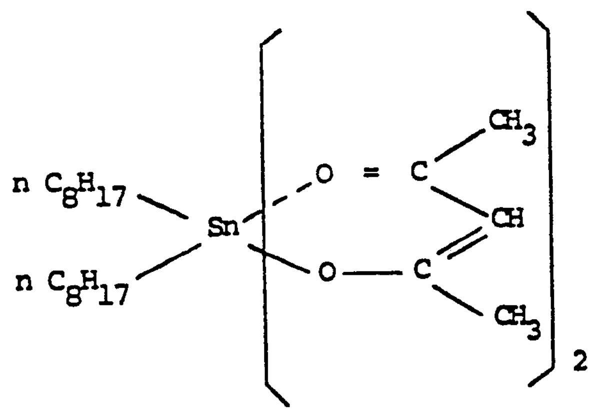

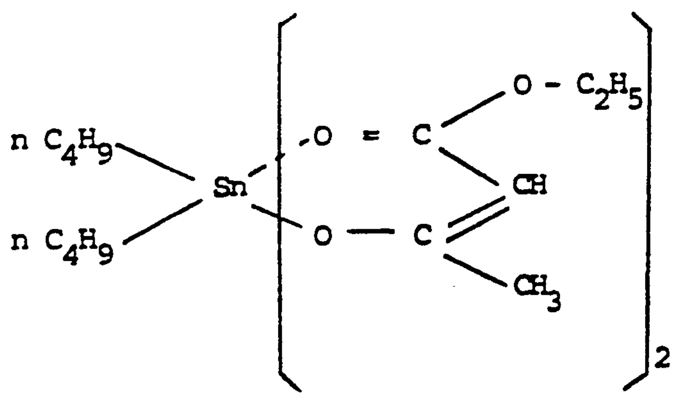

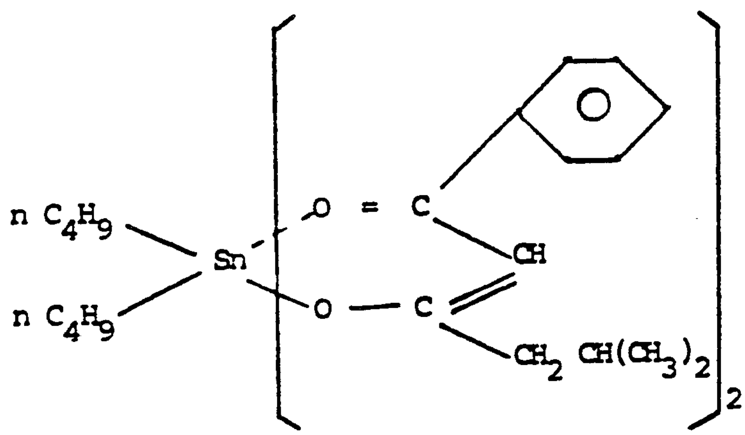

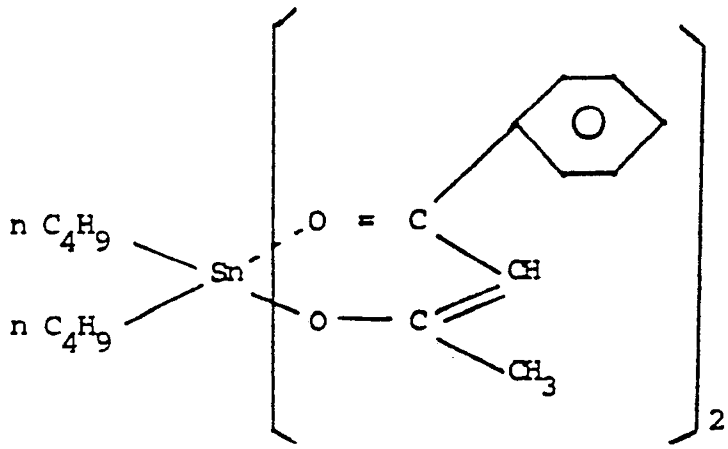

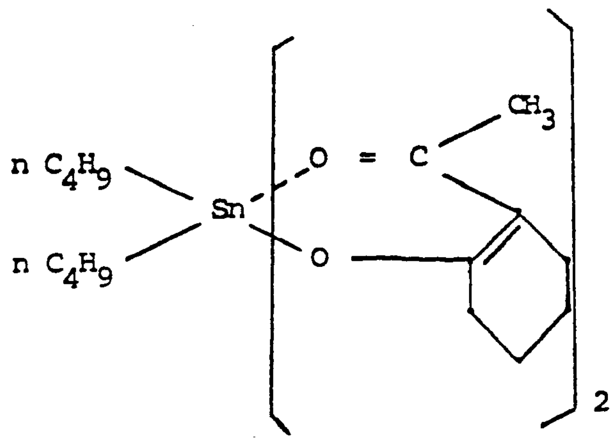

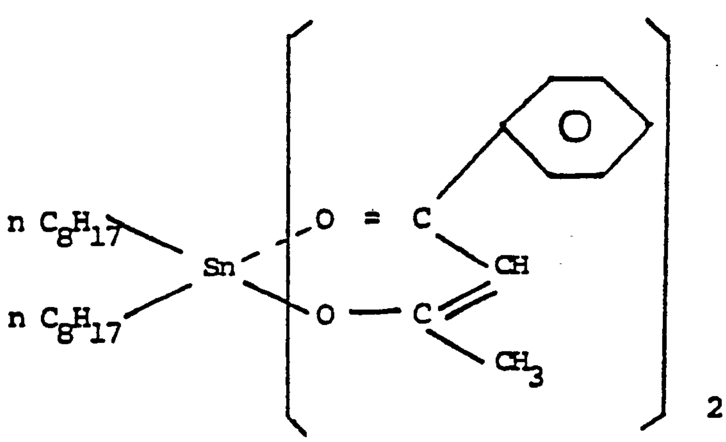

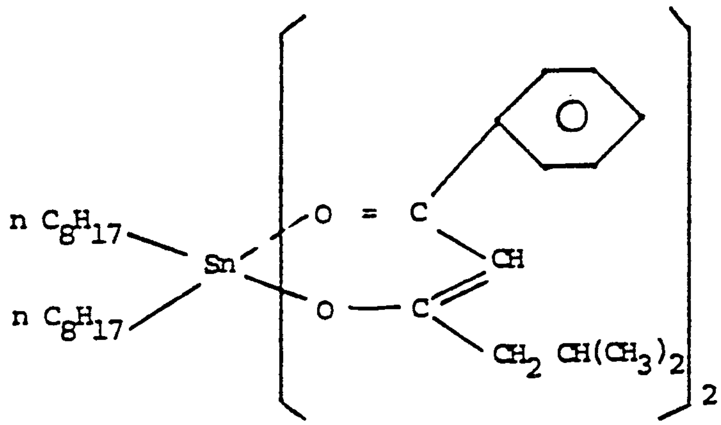

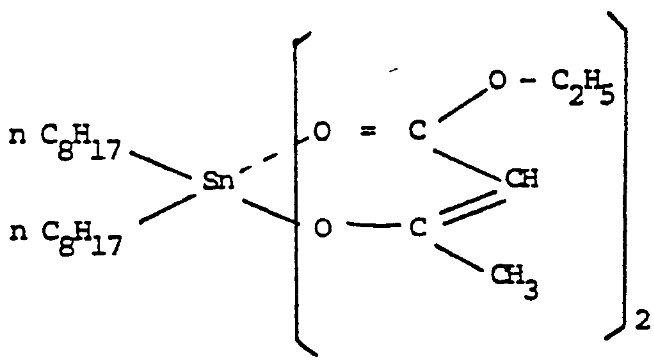

Le dérivé organique de l'étain, de valence IV, exempt de fonction β-dicétonato, qui est combiné avec le bis(β-dicétonate) de diorganoétain, peut être choisi notamment dans le groupe constitué des composés de formules:

$A_2SnR^6_2$ , $R^6_2SnO$ , $AR^6_2SnOSnR^6_2A$ ,

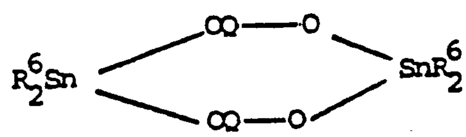

Les symboles $R^6$, identiques ou différents, représentent des radicaux hydrocarbonés, halogénés ou non, en $C_1$—$C_{20}$.

Ces radicaux hydrocarbonés englobent plus spécialement:

les radicaux alkyles linéaires ou ramifiés, halogénes ou non, en $C_1$—$C_{20}$ tels que les radicaux méthyle, éthyle, propyle, isopropyle, butyle, isobutyle, pentyle, hexyle, éthyl-2 hexyle, octyle, nonyle, décyle, undécyle, dodécyle, tétradécyle, pentadécyle, hexadécyle, octadécyle, eicosyle, cholorométhyle, trifluor-3,3,3 propyle, dichloro-4,5 pentyle.

les radicaux alkényles en $C_1$—$C_{18}$ tels que les radicaux vinyle, allyle, butène-2 yle, octène-4 yle, undécényle, pentadécényle, celui de formule $CH_3(CH_2)_7CH{=}CH(CH_2)_7CH_2$.

les radicaux cycloalkyles en $C_4$—$C_{10}$, halogénés ou non, tels que les radicaux cyclobutyle, cyclopentyle, cyclohexyle, méthylcyclohexyle, diméthylcyclohexyle, cyclooctyle, chlorocyclohexyle, trifluorométhylcyclohexyle.

les radicaux cycloalkényles, halogénés ou non $C_4$—$C_{10}$ tels que les radicaux cyclopentyle, cyclohexenyle, cyclooctényle, difluoro-2,3 cyclohexène-1 yle, méthylcyclohexène-2 yle, butylcyclohexène-2 yle.

les radicaux aryles, mononucléaires, halogénés ou non, en $C_6$—$C_{15}$ tels que les radicaux phényle, tolyle, xylyle, éthylphényle, propylphényle, diéthyl-2,3 phényle, chlorophényle, dichlorophényle, trichlorophényle, pentafluorophényle, trifluorométhylphényle, dichloro-4,5 hexylphényle.

les radicaux arylalkyles, mononucléaires en $C_7$—$C_{15}$ halogénés ou non, tels que les radicaux benzyle, phényléthyle, phénylpropyle, phénylbutyle, tolyléthyle, xylylbutyle, trichloro-2,4,5 phényléthyle, pentafluorophényléthyle.

Les symboles A, identiques ou différents, représentent des radicaux organiques et/ou inorganiques, des radicaux organosiliciés ou une chaîne diorganopolysiloxane, tous liés à l'atome d'étain par une liaison Sn—O ou Sn—S, des atomes d'halogène, des radicaux hydroxylés. Ces symboles représentent notamment:

(1) des radicaux monocarboxylates de formule $R^7COO$ dans laquelle le symbole $R^7$ représente un radical hydrocarboné; halogéné ou non, en $C_1$—$C_{20}$; il peut être le même que celui représenté par le symbole $R^6$. Ainsi il englobe les radicaux alkyle, halogénés ou non, en $C_1$—$C_{20}$, les radicaux alkényles en $C_2$—$C_{18}$, les radicaux cycloalkyes et cycloalkényles, halogénés ou non, en $C_4$—$C_{10}$, les radicaux aryles et arylalkyles, mononucléaires, halogénés ou non, en $C_6$—$C_{15}$.

L'illustration de ces radicaux est identique à celle donnée précédemment pour les radicaux représentés par le symbole $R^6$.

(2) des radicaux dicarboxylates de formule

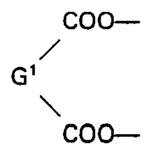

formée par couplage de deux radicaux $R^7COO$.

Ces radicaux dicarboxylates liés au même atome d'étain ou à deux atomes d'étain conduisent aux formules:

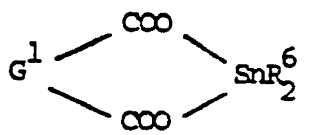

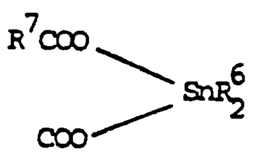

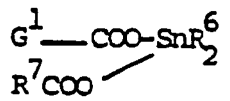

dans lesquelles le symbole $G^1$ représente un radical hydrocarboné divalent en $C_1$—$C_{15}$. Ce radical divalent englobe plus spécialement:

des radicaux alkylènes en $C_1$—$C_{15}$ tels que les radicaux méthylène, éthylène, propylène, butylène, éthyl-2 hexylène, nonylène, dodécylène, pentadécylène.

des radicaux alkénylènes en $C_2$—$C_8$ tels que les radicaux de formules:

$—CH{=}CH—$, $CH_2{=}C—CH_2—$,

$—C(CH_3){=}CH—$, $—(CH_2)_3CH{=}CH—(CH_2)_3—$, $—CH_2CH{=}CH—CH_2$

les radicaux arylènes mononucléaires en $C_6$—$C_{12}$ tels que ceux de formules:

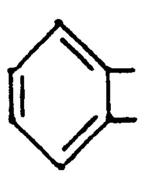 ; 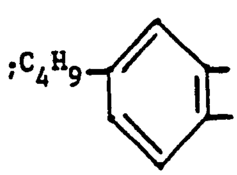 ; 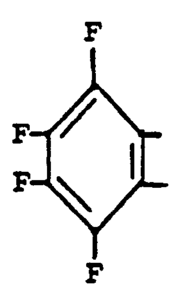 ; 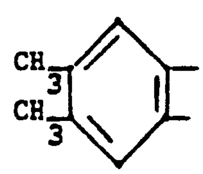

(3) des radicaux dicarboxylate formule:

$R^7OCOG^1COO$

dans laquelle les symboles $R^7$ et $G^1$ ont la signification des symboles $R^7$ et $G^1$ des formules $R^7COO$

et 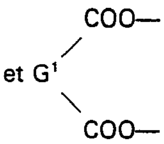

(4) des radicaux alcoxy de formule $R^8O$ dans laquelle le symbole $R^8$ représente un radical hydrocarboné en $C_1$—$C_8$. Ce radical englobe plus spécialement:

des radicaux alkyles en $C_1$—$C_8$ tels que les radicaux méthyle, éthyle, propyle, isopropyle, butyle, isobutyle, tertiobutyle, butyl secondaire, pentyle, éthyl-2 hexyle, octyle.

des radicaux aryles mononucléaires en $C_6$—$C_{10}$ tels que les radicaux phényle, tolyle, xylyle, cuményle.

des radicaux arylalkyles mononucléaires en $C_7$—$C_{10}$ tels que les radicaux benzyle, phényl-2 éthyle, phényl-3 propyle, tolyléthyle.

(5) des radicaux organodioxy de formule:

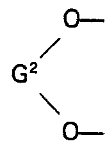

formée par couplage de deux radicaux $R^8O$, dans laquelle le symbole $G^2$ représente un radical hydrocarboné divalent en $C_2$—$C_{10}$.

Ce radical englobe plus spécialement:

des radicaux alkylène en $C_2$—$C_{10}$ tels que les radicaux éthylène, propylène, butylène, éthyl-2 hexylène, décylène, les radicaux de formules $—CH(CH_3)—CH(CH_3)—$, $—C(CH_3)_2—C(CH_3)_2—$.

des radicaux cycloalkylène en $C_5$—$C_{10}$ tels que ceux de formules:

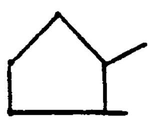 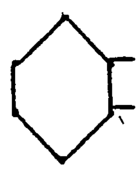

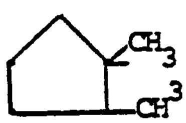 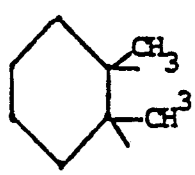

(6) des radicaux polyéthers de formule $—OR^9(OR^{10})_cOR^{11}$ dans laquelle:

le symbole $R^9$ représente des radicaux alkylènes en $C_1$—$C_5$ tels que les radicaux méthylène, éthylène, propylène, butylène, pentylène, les radicaux de formule $—CH(CH_3)—CH_2—$, $—CH_2—CH(CH_3)—CH_2—$.

le symbole $R^{10}$ représente des radicaux alkylène en $C_2$—$C_4$ tels que les radicaux éthylène, propylène, butylène, celui de formule $—CH_2—CH(CH_3)—$.

le symbole $R^{11}$ représente des radicaux alkyles, $C_1$—$C_4$ tels que les radicaux méthyle, éthyle, propyle, butyle, des radicaux acétyles en $C_2$—$C_5$ tels que les radicaux acétyle, propionoyle, butanoyle, pentanoyle.

le symbole C représente O ou un nombre entier compris entre 1 et 55 inclus.

(7) des radicaux cétiminoxy de formule

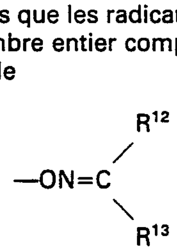

dans laquelle les symboles $R^{12}$ et $R^{13}$, identiques ou différents, représentent des radicaux hydrocarbonés en $C_1$—$C_{10}$; ces radicaux hydrocarbonés englobent plus spécialement:

des radicaux alkyle en $C_1$—$C_8$ tels que les radicaux méthyle, éthyle, propyle, isopropyle, butyle, éthyl-2 hexyle, octyle.

des radicaux aryles mononucléaires en $C_6$—$C_{10}$ tels que les radicaux phényle, tolyle, xylyle, cuményle.

des radicaux arylalkyles mononucléaires en $C_7$—$C_{10}$ tels que les radicaux benzyle, phényléthyle, phénylpropyle.

(8) des radicaux thioalkyles de formule $R^{14}S$ dans laquelle le symbole $R^{14}$ représente un radical hydrocarboné en $C_1$—$C_{10}$. Ce radical englobe notamment:

des radicaux alkyles en $C_1$—$C_{10}$ tels que les radicaux méthyle, éthyle, propyle, butyle, éthyl-2 hexyle, octyle, décyle.

des radicaux aryles mononucléaires en $C_6$—$C_{10}$ tels que les radicaux phényle, tolyle, xylyle, cuményle mésityle.

(9) des radicaux organodithio de formule:

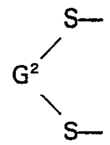

dans laquelle le symbole $G^2$ a la signification du symbole $G^2$ de la formule

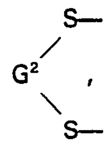 ,

c'est-à-dire un radical hydrocarboné divalent en $C_2$—$C_{10}$ englobant des radicaux alkylènes en $C_2$—$C_{10}$ et des radicaux cycloalkylènes en $C_5$—$C_{10}$.

(10) des radicaux thioglycolates de formule $R^{15}OCOCH_2$—S— dans laquelle le symbole $R^{15}$ représente des radicaux alkyles en $C_1$—$C_{10}$ tels que les radicaux méthyle, éthyle, propyle, butyle, pentyle, hexyle, octyle, isooctyle, décyle.

(11) les radicaux hydroxyle.

(12) des atomes d'halogènes tels que les atomes de fluor, chlore, brome.

(13) des radicaux nitrates, sulfates, carbonates.

(14) des radicaux organosiliciés $R^7_3SiO_{05}$, ou une chaîne courte diorganopolysiloxane $R^7_3SiO$—$(R^7_2SiO$—$)$—$_n$, $R^7$ ayant la signification donnée pour la formule $R^7COO$—, de préférence, $R^7$ est un radical méthyle.

Les symboles Q, identiques ou différents, représentent des radicaux alkylènes en $C_2$—$C_{10}$ tels que les radicaux éthylène, propylène, butylène, pentylène, hexylène, éthyl-2 hexylène, octylène, décylène.

Selon un mode préféré de réalisation de l'invention, on choisit comme dérivé organique de l'étain, de valence IV, exempt de fonction β-dicétonato ceux de formules:

$$A_2\ Sn\ R^6_2 \text{ et } R^6_2Sn\ O$$

Les radicaux $R_6$, préférés sont les radicaux alkyle et plus particulièrement les radicaux butyle, éthyl-2 hexyle et n-octyle.

Les radicaux A préférés sont les radicaux (1), (4), (7) et (14) décrits ci-dessus et plus particulièrement les radicaux (1).

Les dérivés organiques de l'étain préférés exempts de fonction β-dicétonato sont le dilaurate de di-n-butylétain, le dilaurate de di-n-octylétain, le diacétate de di-n-butylétain, le diacétate de di-n-octylétain, le di(éthyl-2)hexanoate de di-n-butylétain, le di(éthyl-2)hexanoate de di-n-octylétain, le diversate de di-n-butylétain et le diversatate de di-n-octylétain.

A titre d'exemples concrets de composés de formule $A_2SnR^6_2$ peuvent être cités les composés répondant aux formules ci-après:

A = Radicaux carboxylates:

$(CH_3COO)_2Sn(CH_3)_2$,

$(CH_3COO)_2Sn(n.C_4H_9)_2$,

$(CH_3COO)_2Sn(n.C_8H_{17})_2$,

$[CH_3(CH_2)_8COO]_2Sn(CH_3)_2$,

$[CH_3(CH_2)_3CH(C_2H_5)COO]_2Sn(CH_3)_2$,

$(CH_3COO)_2Sn(CH_2C_6H_5)_2$,

$[CH_3(CH_2)_3CH(C_2H_5)COO]_2Sn(n.C_4H_9)_2$,

$[CH_3(CH_2)_{14}COO]_2Sn(n.C_4H_9)_2$,

$[CH_3(CH_2)_3CH(C_2H_5)COO]_2Sn(n.C_8H_{17})_2$,

$[CH_3(CH_2)_7CH{=}CH(CH_2)_7COO]_2Sn(n.C_4H_9)_2$,

$[CH_3(CH_2)_{12}COO]_2Sn(C_2H_5)_2$,

$[CH_3(CH_2)_{10}COO]_2Sn(n.C_4H_9)_2$,

$[CH_3(CH_2)_{10}COO]_2Sn(n.C_8H_{17})_2$.

Les versatates de dialkylétain décrit dans le brevet britannique GB—A—1 289 900.

A = Radicaux dicarboxylates:

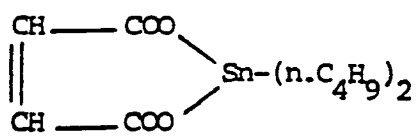

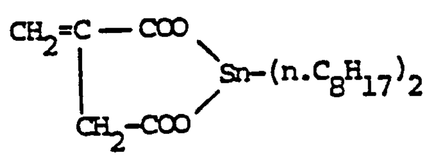

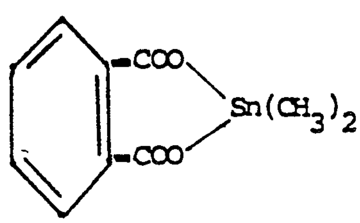

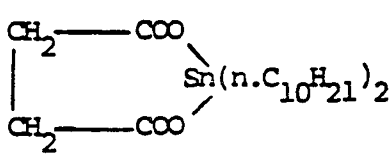

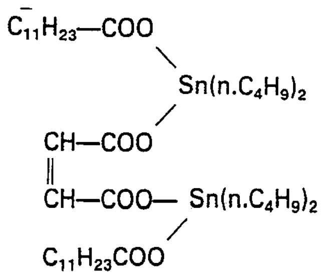

$(C_8H_{17}OCO—CH{=}CH—COO)_2Sn(n.C_4H_9)_2$.

A = Radicaux alcoxy

$(CH_3O)_2Sn(n.C_4H_9)_2$,

$(C_4H_9O)_2Sn(n.C_4H_9)_2$,

$(C_2H_5O)_2Sn(n.C_4H_9)_2$,

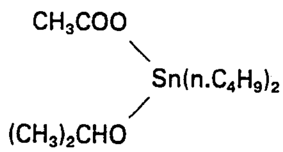

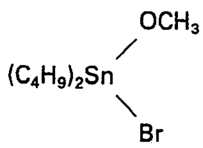

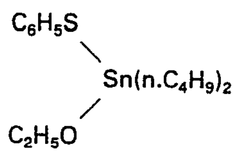

$[CH_3)_2CHO]_2Sn(C_6H_5)(n.C_4H_9)$,

$(CH_3O)_2Sn(C_2H_5)(CH_3)$,

$[CH_3(CH_2)_3CH(C_2H_5)CH_2O]_2Sn(CH{=}CH_2)(C_6H_5)$

A = Radicaux organodioxy

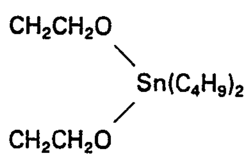

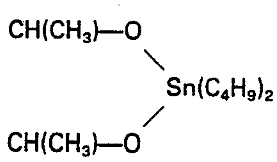

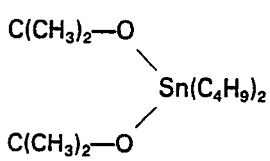

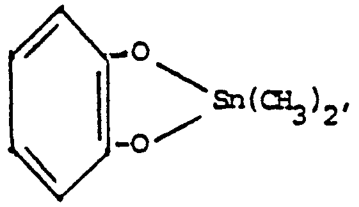

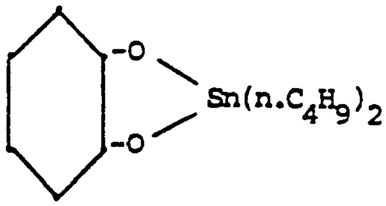

A = Radicaux polyéthers:

$(CH_3)_2Sn(OCH_2CH_2OCH_3)_2$,

$(C_2H_5)Sn[OCH_2—CH(CH_3)OCH_3]_2$,

$(C_4H_9)_2Sn[O(CH_2)_3(OCH_2CH_2)_5OC_2H_5](OC_3H_2)$

$(C_8H_{17})_2Sn[O(CH_2)_3(OCH_2CH_2)_3(OCH_2CH(CH509))_3OCOCH_3](OCOCH_3)$

A = Radicaux cétiminoxy:

$(C_8H_{17})_2Sn[ON{=}C—(CH_3)C_2H_5]_2$,

$(n.C_4H_9)_2Sn[ON{=}C(CH_3)_2]_2$,

$(CH_3)_2Sn[ON{=}C(CH_3)(C_6H_5)]_2$,

$(n.C_4H_9)_2Sn[ON{=}C(CH_3)_2](OC_2H_5)$

A = Radicaux thioalkyle:

$(CH_3)_2Sn(SCH_3)_2$,

$(CH_3)_2Sn(SC_4H_9)_2$,

$(C_6H_5)_2Sn(SC_6H_5)_2$

A = Radicaux organodithio:

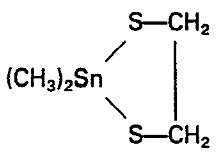

A = Radicaux thioglycolate:

$(C_8H_{17}OCOCH_2—S)_2Sn\ (C_4H_9)_2$

A = Radicaux hydroxyle:

$(C_3H_7)_2Sn(OH)NO_3$

A = Atomes d'halogène:

$(C_2H_5)_2SnF_2$

$(tertio\text{-}C_4H_9)_2SnCl_2$

$(iso\text{-}C_3H_7)_2SnBr_2$

$(CH_2{=}CH)_2SnCl_2$

$(CH_3CCl{=}CH{-}CH_2)_2SnCl_2$

$(C_4H_9)(C_6H_5)SnCl_2$

$C_6H_5(CH_2{=}CH)SnCl_2$

A = Radicaux nitrates, sulfates et carbonates:

$(CH_3)_2Sn(NO_3)_2$

$(CH_3)_2SnSO_4$

$(C_4H_9)_2Sn(CO_3)_2$

A titre d'exemples concrets des produits de formule:

$R^6_2SnO$

$AR^6_2Sn{-}O{-}Sn{-}R^6_2A$

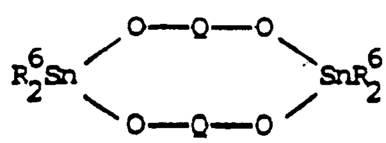

peuvent être cités ceux de formules:

$(C_2H_5)_2SnO$, $(CH_3)_2SnO$, $(C_6H_5)_2SnO$,

$(C_4H_9)_2SnO$, $C_6H_5O(C_4H_9)_2Sn{-}O{-}Sn(C_4H_9)_2(OC_6H_5)$

$Cl(C_4H_9)_2Sn{-}O{-}Sn(C_4H_9)_2Cl$

$Cl(CH_3)_2Sn{-}O{-}Sn(CH_3)_2Cl$

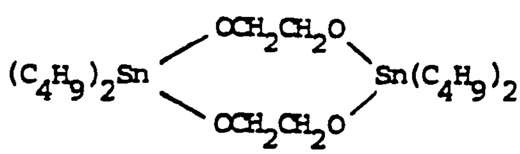

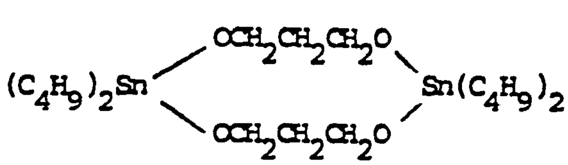

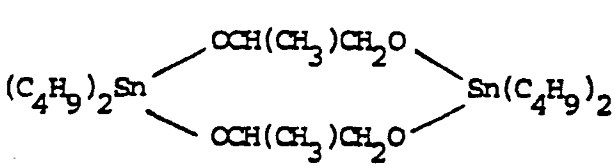

La préparation de ces dérivés organiques de l'étain est connue, elle figure en particulier dans l'ouvrage déjà cité "The Chemistry of Oranotin compounds" de R. C. POLLER édité en 1970 par Academic Press, dans l'ouvrage en trois volumes "Organotin compounds", dirigé par Albert K. SAWYER et édité en 1972 par Marcel DEKKER et dans la collection d'ouvrage dirigée par A. SEYFERTH et R. B. KING, publiée par ELSEVIER SCIENTIFIC PUBLISHING Company, collection intitulée "Organometallic Chemistry Reviews, Annual Surveys: Silicon — Germanium — Tin — Lead".

La préparation du mélange du bis(β-dicétonate) de diorganoétain, appelé par la suite dérivé chelaté, avec le dérivé organique de l'étain exempt de fonction β-dicétonate, appelé par la suite dérivé non chelaté, peut avoir lieu à la température ambiante, par simple incorporation de l'un des produits dans l'autre. De préférence, on opère à l'abri de l'humidité. L'ensemble est agité quelques minutes pour homogénéiser la masse liquide. Cette technique est utilisée lorsque les deux dérivés de l'étain sont liquides.

Dans le cas de l'emploi de deux dérivés dont l'un est solide et l'autre liquide, il peut être nécessaire de chauffer légèrement vers 40—80°C pour dissoudre le dérivé solide.

Dans le cas de l'empoi de deux dérivés solides, il est nécessaire de chauffer au moins à la température de fusion de l'un des deux dérivés de l'étain.

Les quantités entrant dans le mélange représentent, en pourcentage en poids par rapport à l'ensemble des deux dérivés de l'étain, 0,1 à 99,9%, de préférence 1 à 99% du dérivé chelaté et 99,9 à 0,1%, de préférence 99 à 1% du dérivé non chelaté, de façon encore plus préférée 90 à 10%.

Le mélange catalytique obtenu est stable au stockage, en récipient fermé, à la température ambiante. Il est utilisé pour permettre ou faciliter le durcissement en élastomères silicones, dès la température ambiante, de bases organopolysiloxaniques.

Ces bases sont bien connues, elles sont utilisées, souvent après catalyse par un dérivé métallique d'un acide carboxylique, pour la fabrication de joints, de revêtements hydrofuges, de moules, de produits d'enrobage, pour le collage et l'assemblage de matériaux les plus divers, l'enduction de fibres organiques et minérales . . . .

Ces bases peuvent être du type mono-composantes c'est-à-dire stables au stockage en l'absence d'humidité et durcissable en présence d'humidité, en particulier d'humidité apportée par l'air ambiant ou par de l'eau générée au sein de la base lors de son emploi.

Des bases de ce type peuvent être préparées par mélange de:

$A^1$. — 100 parties d'un polymère α-ω-dihydroxydiorganopolysiloxane, de viscosité 700 à 1 000 000 mPa.s à 25°C, formé d'une succession de motifs diorganosiloxy de formule $T_2SiO$ dans laquelle les symboles T, identiques ou différents, représentent des radicaux hydrocarbonés ayant de 1 à 10 atomes de carbone, substitués ou non par des atomes d'halogène, des groupes cyano.

$B^1$. — 0,5 à 20 parties d'un agent réticulant choisi parmi les composés organosiliciques portant plus de deux radicaux hydrolysables, liés aux atomes de silicium, par molécule.

$C^1$. — 0 à 250 parties de charges minérales.

$D^1$. — 0 à 20 parties d'un agent d'adhérence.

Les polymères α-ω-di(hydroxy)diorganopolysiloxanes de viscosité 700 à 1 000 000 mPa.s à 25°C, de préférence 1 000 à 700 000 mPa.s à 25°C, sont des polymères linéaires, constitués essentiellement de motifs diorganosiloxy de formule précitée $T_2SiO$, et bloqués à chaque extrémité de leur chaîne par un groupe hydroxyle; toutefois, la présence de motifs monoorganosiloxy de formule $TSiO_{1,5}$ et/ou de motifs siloxy de formule $SiO_2$, n'est pas exclue dans la proportion d'au plus 2% par rapport au nombre de motifs diorganosiloxy.

Les radicaux hydrocarbonés, ayant de 1 à 10 atomes de C, substitués ou non par des atomes d'halogènes ou des groupes cyano, représentés par les symboles T, englobent:

les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.

les radicaux cycloalkyles et halogénocycloalkyles ayant de 1 à 10 atomes de carbone tels que les radicaux cyclopentyle, cycohexyle, méthylcyclohexyle, propylcyclohexyle, difluoro-2,3 cyclobutyle, difluoro-3,4 méthyl-5 cycloheptyle.

les radicaux alcényles ayant de 2 à 4 atomes de carbone tels que les radicaux vinyle, allyle, butène-2 yle.

les radicaux aryles et halogénoaryles mononucléaires ayant de 6 à 10 atomes de carbone tels que les radicaux phényle, tolyle, xylyle, chlorophényle, dichlorophényle, trichlorophényle.

les radicaux cyanoalkyles dont les chaînons alcoyles ont de 2 à 3 atomes de carbone tels que les radicaux β-cyanoéthyle et -cyanopropyle. les radicaux méthyle, phényle, vinyle et trifluoro-3,3,3-propyle sont les radicaux préférés.

A titre d'exemple concrets de motifs représentés par la formule $T_2SiO$ on peut citer ceux de formules:

$(CH_3)_2SiO$,

$CH_3(CH_2{=}CH)SiO$

$CH_3(C_6H_5)SiO$

$(C_6H_5)_2SiO$,

$CF_3CH_2CH_2(CH_3)SiO$

$NC{-}CH_2CH_2(CH_3)SiO$

$NC{-}CH(CH_3)CH_2(CH_2{=}CH)SiO$

$NC{-}CH_2CH_2CH_2(C_6H_5)SiO$

Il doit être compris que l'on peut utiliser comme polymère ($A^1$) un mélange constitué de polymères α-ω di(hydroxy)diorganopolysiloxanes qui diffèrent entre eux par le poids moléculaire et/ou la nature des groupements liés aux atomes de silicium.

Ces polymères α-ω-di(hydroxy)diorganopolysiloxanes ($A^1$) sont commercialisés; en outre, ils peuvent être aisément fabriqués selon des techniques maintenant bien connues.

Les agents réticulants ($B^1$) sont employés à raison de 0,5 à 20 parties, de préférence 1 à 18 parties, pour 100 parties de polymères α-ω-di(hydroxy)diorganopolysiloxanes ($A^1$). Ce sont des composés organosiliciques portant plus de deux radicaux hydrolysables, liés aux atomes de silicium, par molécule.

Comme exemples de radicaux hydrolysables convenables peuvent être cités les radicaux amino-N substitué, amido-N substitué, aminoxy-N,N disubstitué, cétiminoxy, aldiminoxy, alcoxy, alcoxyalkylène-oxy, enoxy, acyloxy.

De préférence, l'agent réticulant répond à la formule générale:

$$Y_fSiW_gZ_{4-f-g}$$

dans laquelle:

le symbole Y représente un radical hydrocarboné en $C_1$—$C_{10}$, substitué ou non par des atomes d'halogène, des groupes cyano,

les symboles Z identiques ou différents représentent des radicaux hydrolysables choisis parmi ceux de formules:

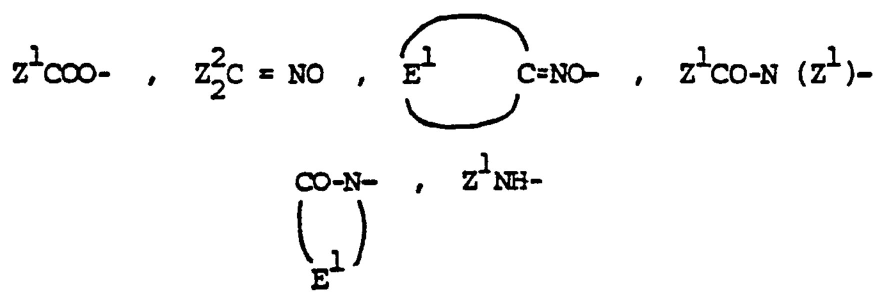

dans lesquelles les symboles $Z^1$, identiques ou différents, représentent des radicaux hydrocarbonés en $C_1$—$C_{15}$, les symboles $Z^2$, identiques ou différents représentent des radicaux hydrocarbonés en $C_1$—$C_8$, le symbole $E^1$ représente un radical alkylène en $C_4$—$C_8$.

les symboles W, identiques ou différents, représentent des radicaux alcoxy de formules $Z^3O$, $Z^3OE^2O$ dans laquelle le symbole $Z^3$ représente un radical alkyle en $C_1$—$C_4$, le symbole $E^2$ un radical alkylène en $C_2$—$C_4$.

le symbole f représente zéro ou un.

le symbole g représente zéro, 1 ou 2.

Le symbole Y peut avoir la même signification que le symbole T des motifs précédents de formule $T_2SiO$; ainsi l'illustration donnée pour T convient également pour Y.

Les symboles $Z^1$ représentent des radicaux hydrocarbonés en $C_1$—$C_{15}$ qui englobent:

les radicaux alkyles en $C_1$—$C_{15}$ tels que les radicaux méthyle, éthyle, propyle, éthyl-2 hexyle, octyle, décyle, dodécyle, pentadécyle.

les radicaux cycloalkyles en $C_5$—$C_{10}$ tels que les radicaux cyclopentyle, cyclohexyle, méthylcyclohexyle, diméthylcyclohexyle, propylcyclohexyle, cycloheptyle.

les radicaux aryles mononucléaires en $C_6$—$C_{10}$ tels que les radicaux phényle, tolyle, xylyle.

les radicaux alcényles en $C_2$—$C_{15}$ tels que les radicaux octényle, undécenyle, tétradécenyle.

Les symboles $Z^2$ représentent des radicaux hydrocarbonés en $C_1$—$C_8$ qui englobent notamment:

les radicaux alkyles en $C_1$—$C_8$ tels que les radicaux méthyle, éthyle, propyle, isopropyle, butyle, isobutyle, éthyl-2 hexyle, octyle.

les radicaux cycloalkyles en $C_5$—$C_8$ tels que les radicaux cyclopentyle, cyclohexyle, méthylcyclohexyle.

les radicaux aryles mononucléaires en $C_6$—$C_8$ tels que les radicaux phényle, tolyle, xylyle.

Le symbole $Z^3$ représente un radical alkyle en $C_1$—$C_4$ tel que le radical méthyle, éthyle, propyle, butyle.

Le symbole $E^1$ représente un radical alkylène en $C_4$—$C_8$ qui peut répondre aux formules: $(CH_2)_4$, $(CH_2)_5$, $(CH_2)_6$, $(CH_2)_7$, $—CH_2—CH(C_2H_5)(CH_2)_3—$, $—CH_2—CH_2—CH(CH_3)CH_2CH_2—$.

Le symbole $E^2$ représente un radical alkylène en $C_2$—$C_4$ qui peut répondre aux formules: $(CH_2)_2$, $—CH(CH_3)—CH_2—$, $—CH(CH_3)CH_2CH_2—$, $—CH(CH_3)—CH(CH_3)—$.

Les agents réticulants $B^1$ de formule $Y_fSiW_gZ_{,4-f-g}$ sont utilisés pour la préparation de compositions organopolysiloxaniques mono-composantes commercialisées et sont décrits dans de nombreux documents de la littérature chimique.

Ci-après sont cités, à titres d'exemple:

(1) des silanes répondant à la formule $Y_fSiZ_{4-f}$ laquelle découle de la formule précédente pour g = zéro et (2) des brevets les décrivant:

$Z = Z^1COO—$:

$CH_3Si(OCOCH_3)_3$, $C_2H_5Si(OCOCH_3)_3$,

$CH_2 = CHSi(OCOCH_3)_3$, $C_6H_5Si(OCOCH_3)_3$,

$CH_3Si[OCOCH(C_2H_5)(CH_2)_3—CH_3]_3$,

$CF_3CH_2CH_2Si(OCOC_6H_5)_3$, $CH_3Si(OCOC_6H_5)_3$,

$CH_3Si(OCOCH_3)_2OCOCH(C_2H_5)(CH_2)_3CH_3$,

$CH_3COOSi[OCOCH(C_2H_5)(CH_2)_3CH_3]_3$

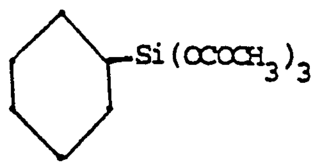 , $CN-CH_2CH_2Si(OCOCH_3)_3$

Brevets Français: 1 198 749, 1 220 348, 2 464 288.

$Z = (Z^2)_2C=NO$ , 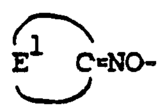

$CH_3SI[ON=C(CH_3)_2]_3$, $CH_3Si[ON=C(CH_3)C_2H_5]_3$,

$CH_2=CHSi[ON=C(CH_3)C_2H_5]_3$, $C_6H_5Si[ON=C(CH_3)_2]_3$,

$CH_3Si(ON=C(C_2H_5)(CH_2)_3CH_3]_3$,

$CH_3Si[ON=C(CH_3)CH_2CH(C_2H_5)(CH_2)_3CH_3]_2$,

$(CH_3)_2C=NOSi[ON=C(CH_3)C_2H_5]_3$,

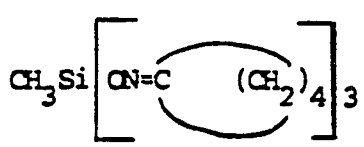

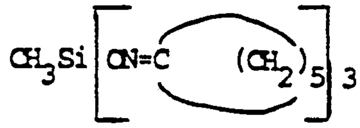

Brevets français: 1 314 649, 1 371 250, 2 074 144.

$Z = Z^1CON(Z^1)-$ ou 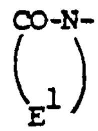

$CH_3Si[N(CH_3)COCH_3]_3$

$CH_3Si[N(C_6H_5)COCH_3]_3$

$CF_3CH_2CH_2Si[N(C_6H_5)COCH_3]_3$

$CH_2{=}CH—Si[N(CH_3)COC_6H_5]_3$

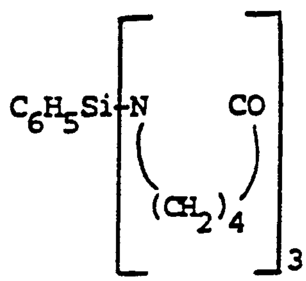 , 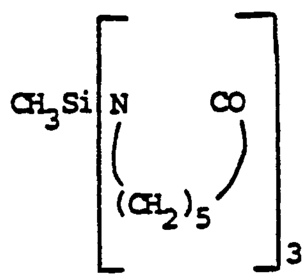

Brevets français: 1 423 477, 2 201 326

$Z = Z'NH$

$CH_3Si—(NH\ n.C_4H_9)_3$

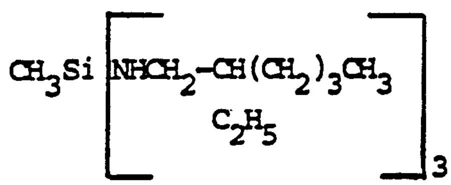

$C_6H_5Si(NH\ iso.\ C_4H_9)_3$

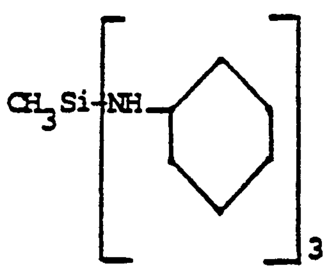

$CH_2 = CHSi(NH\ iso.C_4H_9)_3$

Brevets français 1 248 826, 1 510 778, 2 201 327

$Z = Z^1NH$ et $(Z^2)_2C{=}NO—$

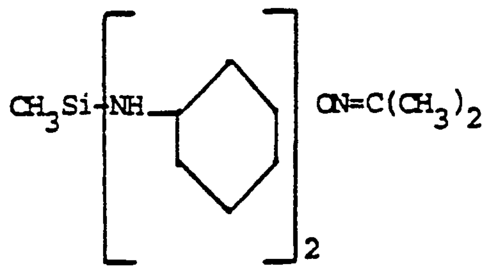

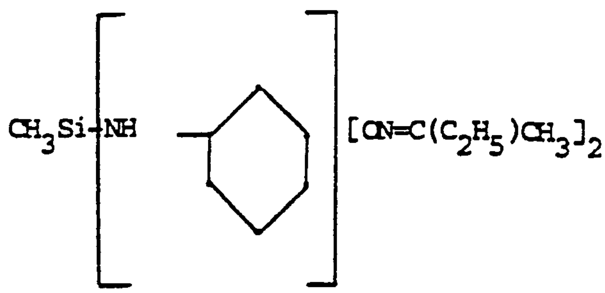

$CH_2{=}CHSi(NH\ n.C_4H_9)_2[ON{=}(C_2H_5)CH_3]$

Ci-après sont cités, à titre d'exemples, (1) des silanes répondant à la formule $Y_fSiW_gZ_{4-f-g}$ dans laquelle g représente 1 ou 2.

$Z = Z^1COO$

$W = Z^3O$ et $Z^3OE^2O—$

$CH_3Si(OCH_3)(OCOCH_3)_2$,

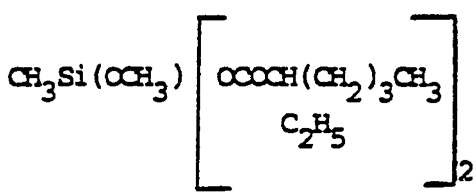

$CH_2{=}CHSi(OCH_2CH_2OCH_3)(OCOCH_3)_2$

$(CH_3)_3COSi(OCOCH_3)_3$

$Z = (Z^2)_2C{=}NO—$

$W = Z^3O$ et $Z^3OE^2O—$

$CH_3Si(OC_2H_5)[ON{=}C(CH_3)_2]_2$

$CH_3Si(OCH_2CH_2OCH_3)[ON{=}C(CH_3)_2]_2$

$CH_3Si(OCH_2CH_2OCH_3)_2[ON{=}C(CH_3)C_2H_5]$

$Z = Z^1CON(Z^1)$ et 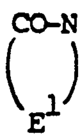

$W = Z^3O$

$CH_3Si(OCH_3)[N(CH_3)COCH_3]_2$

$CH_3Si(OC_2H_5)[N(CH_3)COC_6H_5]_2$

$CH_3Si(OC_2H_5)_2[N(CH_3)COC_6H_5]$

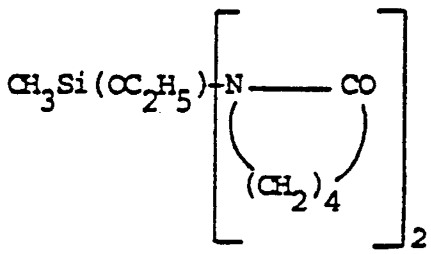

$Z = Z^1NH$ et $Z^1COO$

$W = Z^3O$

$(C_2H_5O)_2Si(OCOCH_3)[NHCH(CH_3)_2]$

Ces silanes mixtes sont plus spécialement décrits dans la première addition 90 695 au brevet français 1 423 477 et dans les brevets français 1 439 025, 1 541 542, 1 541 543 et 2 067 636.

Les charges minérales ($C^1$) sont utilisées à raison de 0 à 250 parties, de préférence 5 à 200 parties, pour 100 parties des polymères α-ω-di(hydroxy)diorganopolysiloxanes ($A^1$).

Ces charges peuvent se présenter sous la forme de produits très finement divisés dont le diamètre particulaire moyen est inférieur à 0,1 micromètre. Parmi ces charges figurent les silices de combustion et les silices de précipitation; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 $m^2/g$.

Ces charges ($C^1$) peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français 1 126 884, 1 136 885, 1 236 505; brevet anglais 1 024 234). Les charges traitées renferment, dans la plupart des cas, de 3 à 30% de leur poids de composés organosiliciques.

Les charges ($C^1$) peuvent être constituées d'un mélange de plusieurs types de charges de granulométrie différente; ainsi par exemple, elles peuvent être constituées de 30 à 70% de silices finement divisées de surface spécifique BET supérieure à 40 $m^2/g$ et de 70 à 30% de silices plus grossièrement divisées de surface spécifique inférieure à 30 $m^2/g$.

Egalement peut être ajouté un agent d'adhérence ($D^1$) à raison de 0 à 20 parties, de préférence 0,2 à 15 parties, pour 100 parties des huiles α-ω-dihydroxydiorganopolysiloxanes ($A^1$). De préférence, cet agent est choisi parmi les composés organosiliciques portant à la fois (1) des groupes organiques substitués par des radicaux choisis dans le groupe des radicaux amino, uréido, isocyanato, epoxy, alkényle, isocyanurate, hydanatoïle, mercaptoester et (2) des groupes hydrolysables liés aux atomes de silicium.

A titre illustratif peuvent être cités les composés organosiliciques répondant aux formules ci-après (accompagnés des brevets les décrivant):

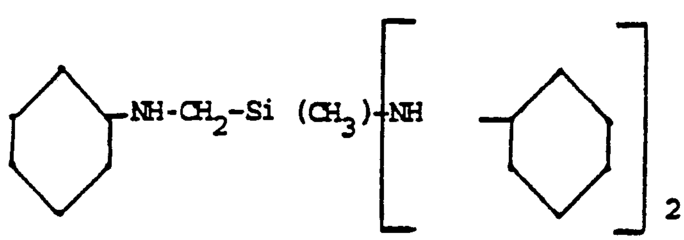

Demande européenne 74 001

$NH_2CH_2CH_2NH—CH_2CH(CH_3)COO(CH_2)_3Si(OCH_3)_3$

Demande allemande 3 304 182

$[(CH_3)_3CO]_2Si(OCOCH_3)_2$

Brevet américain 4 356 116

$CH—COO(CH_2)_3Si(OCH_3)_3$
‖
$CH—COO(CH_2)_3Si(OCOCH_3)_3$

Brevet américain 4 273 698

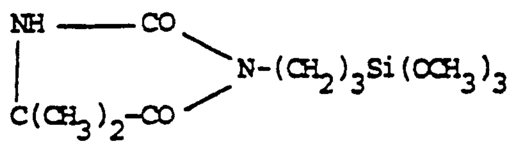

Demande européenne 31 996

$(C_2H_5O)_3Si(CH_2)_3NHCO—CH=CH—COOH$

Brevet américain 4 466 739

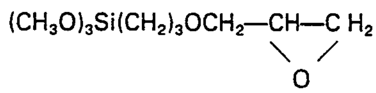

Brevet américain 4 115 356

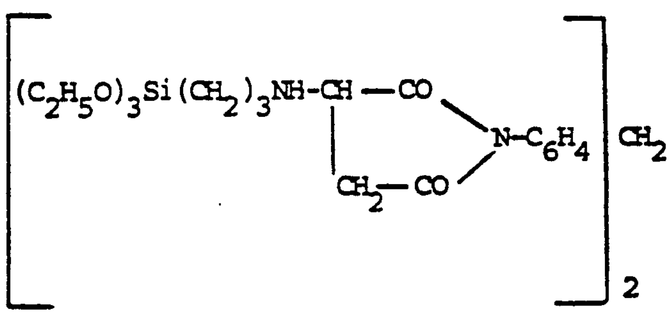

Brevet français 2 259 833

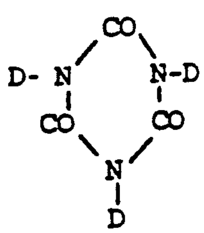

$D = (CH_2)_3Si(OCH_3)_3$

Brevet américain 3 517 001

$(C_2H_5O)_3Si(CH_2)_3NH_2$

$(CH_3O)_3Si(CH_2)_3NH—CH_2CH_2NH_2$

D'autres bases mono-composantes peuvent être préparées par mélange de:

($A^2$): 100 parties d'un polymère α-ω-dihydroxydiorganopolysiloxane de viscosité 700 à 1 000 000 de mPa.s à 25°C,

($B^1$): 0,5 à 20 parties d'un polyalcoxysilane de formule $M_hSiW_{4-h}$ dans laquelle:

le symbole M représente un radical hydrocarboné en $C_1—C_{10}$ halogéné ou non,

les symboles W, identiques ou différents, représentent des radicaux alcoxy ou polyalcoxy de formules $Z^3O$, $Z^3OE^2O$ dans lesquelles le symbole $Z^3$ représente un radical alkyle en $C_1—C_4$, le symbole E un radical alkylène en $C_2—C_4$,

le symbole h représente 0 ou 1.

($C^2$): 0 à 250 parties de charges minérales,

($D^2$): 0,5 à 15 parties d'un composé choisi dans le groupe constitué:

1. des amines organiques primaires, secondaires ayant un pKb en milieu aqueux inférieur à 5, des

aminoorganosilanes et aminoorganopolysiloxanes portant par molécule (i) au moins un groupe organique en $C_1$—$C_{15}$ lié par une liaison SiC à l'atome de silicium, et substitué, par au moins un radical amino et (2i) au moins un radical alcoxy en $C_1$—$C_5$ ou alcoxyalkylène-oxy en $C_3$—$C_6$.

2. des dérivés organiques du titane et du zirconium portant des groupes organoxy et/ou β-dicétonato.

Le polymère α-ω-dihydroxydiorganopolysiloxane ($A^2$) est semblable au polymère α-ω-dihydroxydiorganopolysiloxane ($A^1$) décrit précédemment. De préférence sont utilisés des polymères de viscosité 1 000 à 500 000 mPa.s à 25°C dont au moins 80% des radicaux liés aux atomes de silicium sont des radicaux méthyle.

Pour 100 parties de ce polymère sont utilisées 0,5 à 20 parties, de préférence 1 à 18 parties d'un polyalcoxysilane de formule précitée $M_hSiW_{4-h}$. Le symbole M de cette formule représente un radical hydrocarboné en $C_1$—$C_{10}$ halogéné ou non qui englobe plus spécialement:

les radicaux alkyles en $C_1$—$C_5$ tels que les radicaux méthyle, éthyle, propyle, isopropyle, butyle, isobutyle, tertiobutyle, n-pentyle, isopentyle, trifluoro-3,3,3-propyle,

les radicaux alcényles en $C_2$—$C_4$ tels que les radicaux vinyle, allyle, butène-2 yle,

les radicaux cycloalkyles en $C_5$—$C_8$ tels que les radicaux cyclopentyle, cyclohexyle, méthylcyclohexyle,

les radicaux aryles mononucléaires en $C_6$—$C_{10}$ tels que les radicaux phényle, tolyle, xylyle, chlorophényle.

Les symboles W, identiques ou différents, ont la signification des symboles W de la formule précédemment décrite $(Y)_fSiW_g(Z)_{4-f-g}$; ils représentent donc des radicaux alcoxy ou polyalcoxy de formule: $Z^3O$ et $Z^3OE^2O$, dans lesquelles le symbole $Z^3$ représente un radical alkyle en $C_1$—$C_4$, tel que le radical méthyle, éthyle, propyle, butyle et le symbole $E^2$ un radical alkylène en $C_2$—$C_4$ pouvant répondre aux formules: $(CH_2)_2$, $—CH(CH_3)CH_2—$, $—CH(CH_3)CH(CH_3)—$.

A titre d'exemples concrets des polyalcoxysilanes de formule $(B^2)M_hSiW_{4-h}$ peuvent être cités ceux de formules:

$$Si(OCH_3)_4$$

$$CH_3Si(OCH_3)_3$$

$$CH_3Si(OCH_2CH_2OCH_3)_3$$

$$CH_3Si(OCH_2CH_2OCH_2CH_3)_3Si(OCH_2CH_2OCH_3)_4$$

$$CH_2{=}CHSi(OCH_2CH_2OCH_3)_3$$

$$C_6H_5Si(OCH_3)_3$$

$$C_6H_5Si(OCH_2CH_2OCH_3)_3$$

$$Si(OCH_3)_2[OCH(CH_3)CH_2OCH_3]_2$$

$$CH_2{=}CHSi(OCH_3)_3$$

$$CH_2{=}CHSi(OCH_2CH_2OCH_2CH_3)_3$$

$$CH_2{=}CH—CH_2Si(OCH_3)_3$$

$$CH_2{=}C(CH_3)CH_2Si(OCH_3)_3$$

$$CH_2{=}CH—Si(OCH_3)_2[OCH(CH_3)CH_2OCH_3]$$

Les charges minérales ($C^2$) sont analogues aux charges minérales ($C^1$) précédemment décrites.

Les composés ($D^2$) sont utilisés à raison de 0,5 à 15 parties, de préférence 0,8 à 13 parties, pour 100 parties des polymères α-ω-dihydroxydiorganopolysiloxanes ($A^2$). Ils peuvent être choisis, comme déjà indiqué, dans le groupe constitué des amines organiques primaires, secondaires, ayant un pKb en milieu aqueux inférieur à 5. De telles amines peuvent être aliphatiques, cycloaliphatiques, hétérocycliques, arylaliphatiques.

A titre d'exemple concrets d'amines aliphatiques peuvent être citées : la n-butylamine, l'amylamine, les amines de formules:

$$CH_3—\underset{\displaystyle CH_3}{\underset{|}{CH}}—CH_2CH_2NH_2$$

$$CH_3—CH_2—C(CH_3)_2NH_2$$

la n-hexylamine, la n-décylamine, la laurylamine, l'hexadécylamine, la n-octylamine, la di(isopropyl)amine,

la di(n-butyl)amine, la di(isobutyl)amine, la di-n hexylamine, l'éthylènediamine, la propylènediamine, l'hexaméthylènediamine, les polyamines de formules:

$$H_2NCH_2CH_2—CH—CH_2C(CH_3)_2CH_2NH_2$$
|
$CH_3$

$$H(NHCH_2CH_2)_2NH_2$$

$$H(HNCH_2CH_2)_3NH_2$$

$$H_2NCH_2CH(NH_2)CH_2NH_2$$

A titre d'exemples concrets d'amines cycloaliphatiques peuvent être citées la cyclopentylamine, la cyclohexylamine, les amines de formules:

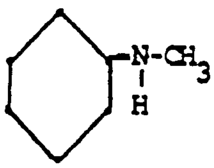
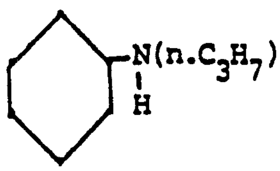
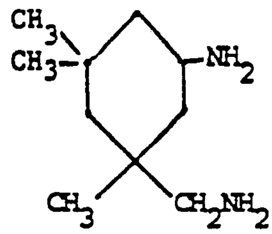

A titre d'exemples concrets d'amines hétérocycliques peuvent être citées : la pipéridine, la pyrrolidine, la pipérazine, les amines de formules:

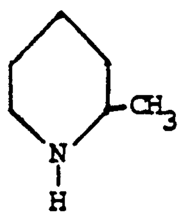
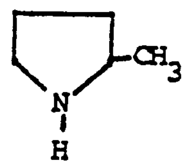

A titre d'exemples concrets d'amines arylaliphatiques peuvent être citées : la benzylamine, la phényléthylamine.

Toutes ces amines organiques sont connues ainsi que leur procédé de préparation; par ailleurs on trouve un grand nombre d'entre elles sur le marché industriel.

Les composés ($D^2$) peuvent être choisis également parmi les aminoorganosilanes et aminoorganopolysiloxanes portant par molécule (i) au moins un groupe organique en $C_1—C_{15}$, lié par une liaison SiC à l'atome de silicium, et substitué par au moins un radical amino et (2i) au moins un radical alcoxy en $C_1—C_5$ ou alcoxyalkylènoxy en $C_3—C_6$.

Comme exemple concretes d'organoaminosilanes peuvent être cités ceux de formules ci-après, dans lesquelles le groupe organique substitué par au moins un radical amino est un groupe hydrocarboné:

$$H_2N(CH_2)_3Si(OCH_2CH_2OCH_3)_3$$

$$H_2N(CH_2)_3Si(OCH_3)_3$$

$$H_2N(CH_2)_3Si(OC_2H_5)_3$$

$$H_2N(CH_2)_4Si(OCH_3)_3$$

$$H_2NCH_2CH(CH_3)CH_2CH_2SiCH_3(OCH_3)_2$$

$$H_2NCH_2Si(OCH_3)_3$$

$$HN(n.C_4H_9)CH_2Si(OCH_3)_3$$

$$H_2N(CH_2)_2NH(CH_2)_3Si(OCH_3)_3$$

$$H_2N(CH_2)_2NH(CH_2)_3Si(OCH_2CH_2OCH_3)_3$$

$CH_3NH(CH_2)_2NH(CH_2)_3Si(OCH_3)_3$

$H(NHCH_2CH_2)_2NH(CH_2)_3Si(OCH_3)_3$

$H_2N(CH_2)_2NH(CH_2)_3Si(OCH_3)_2$
$\qquad\qquad\qquad\qquad|$
$\qquad\qquad\qquad OCH(CH_3)CH_2OCH_3$

$H_2N(CH_3)_3Si(OCH_2CH_2OCH_2CH_3)_3$

$H_2N(CH_2)_2NH(CH_2)_3SiCH{=}CH_2$
$\qquad\qquad\qquad\qquad|$
$\qquad\qquad\qquad (OCH_3)_2$

La préparation de ces silanes figure plus spécialement dans des brevets américains 2 754 311, 2 832 754, 2 930 809, 2 971 864.

Comme exemples concrets d'organoaminosilanes peuvent être cités ceux de formules ci-après, dans lesquelles, le groupe organique substitué par au moins un radical amino est un groupe hydrocarboné portant des liaisons éther ou thioéther:

$H_2N(CH_2)_3O(CH_2)_3Si(OCH_2CH_2OCH_3)_3$

$H_2N(CH_2)_3O(CH_2)_3Si(OCH_3)_3$

$C_2H_5NH(CH_2)_3O(CH_2)_3Si(OCH_3)_3$

$H_2N{-}CH_2{-}CH(CH_3)CH_2O(CH_2)_3SiC_6H_5(OCH_3)_2$

$H_2N{-}CH_2CH_2NH(CH_2)_3O(CH_2)_3Si(OCH_3)_3$

$H_2N(CH_2)_2S(CH_2)_3Si(OCH_2CH_2OCH_3)_3$

$H_2N(CH_2)_2S(CH_2)_3Si(OCH_3)_3$

$H(NHCH_2CH_2)_2S(CH_2)_3SiCH_3(OCH_3)_2$

La préparation de ces silanes figure, en particulier, dans les brevets américains 3 341 563, 3 551 375, 3 598 853, 3 488 373.

Les aminoorganopolysiloxanes utilisables peuvent être préparés par condensation des aminoorganosilanes précités, et plus particulièrement des aminoorganosilanes trialcoxylés tels que ceux de formules:

$H_2N(CH_2)_3Si(OC_2H_5)_3$

$H_2N(CH_2)_3Si(OCH_3)_3$

$H_2N(CH_2)_2NH(CH_2)_3Si(OCH_3)_3$

avec un polymère di(hydroxy)diorganopolysiloxane appartenant à la classe des polymères précités ($A^1$) et ($A^2$).

Des aminoorganopolysiloxanes préparés selon ce processus figurent notamment dans le brevet américain 3 686 375, la demande européenne 50 453, les brevets français 1 381 590, 1 385 693, 2 228 814.

A titre d'exemples concrets de ces polymères peuvent être cités ceux de formules:

$H_2N(CH_2)_3Si(OCH_3)_2[OSi(CH_3)_2]_nOSi(OCH_3)_2(CH_2)_3NH_2$

$H_2N(CH_2)_2NH(CH_2)_3Si(OCH_3)_2[OSi(CH_3)_2]_nOSi(OCH_3)_2(CH_2)_3NH(CH_2)_2NH_2$

$n = 2$ à 60.

Les composés ($D^2$) peuvent être choisis encore parmi les dérivés organiques du titane et du zirconium portant des groupes organoxy et/ou β-dicétonato liés aux atomes de silicium.

Comme exemples concrets de dérivés organiques du titane peuvent être cités ceux de formules:

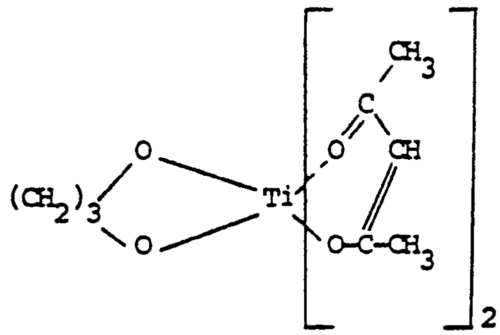

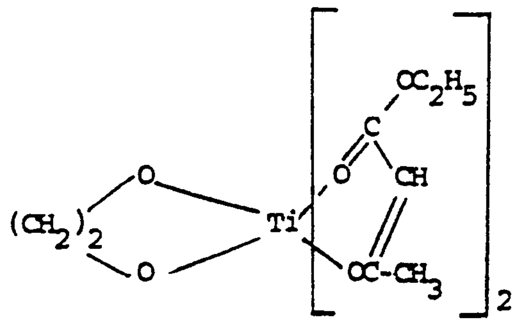

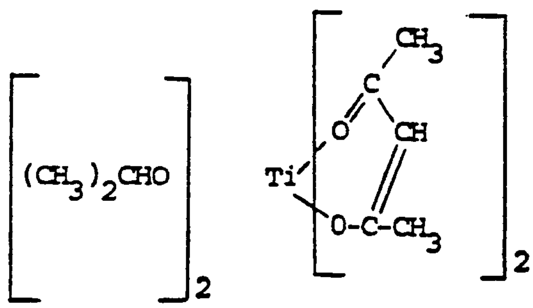

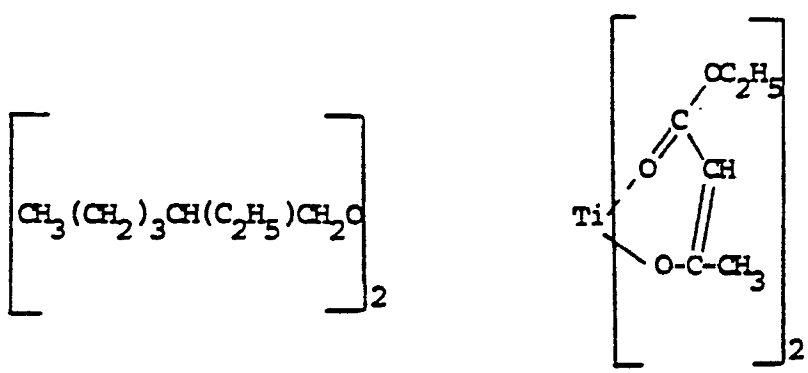

$(n.C_5H_9O)_4Ti$

$(C_2H_5O)_4Ti$

$(CH_3)_2CHO_4Ti$

$(n.C_3H_7O)_4Ti$

$(n.C_8H_{17}O)_4Ti$

$(CH_3CH_2OCH_2CH_2O)_4Ti$

$(CH_3OCH_2CH_2O)_4Ti$

$$\left[CH_3(CH_2)_3CH(C_2H_5)CH_2O\right]_4Ti$$

Ces dérivés organiques du titane figurent en particulier dans les brevets français 1 330 625, 2 121 289, 2 121 631.

Comme exemples concrets de dérivés organiques du zirconium peuvent être cités ceux de formules:

$(C_2H_5O)_4Zr$

$\left((CH_3)_2CHO\right)_4Zr$

$(n.C_3H_7O)_4Zr$

$(n.C_4H_9O)_4Zr$

$\left((CH_3)_3C\text{—}O\right)_4Zr$

$(CH_3OCH_2CH_2O)_4Zr$

$(n.C_7H_{15}O)_4Zr$.

D'autres bases mono-composantes peuvent encore être préparées par mélange de:

($A^3$): 100 parties d'un polymère diorganopolysiloxane de formule:

$$W_{3-h}M_hSi(OSiT_2)_pOSiM_hW_{3-h}$$

dans laquelle les symboles T, identiques ou différents, représentent des radicaux hydrocarbonés ayant de 1 à 10 atomes de carbone substitués ou non par des atomes d'halogène, des groupes cyano, les symboles M, identiques ou différents, représentent des radicaux hydrocarbonés en $C_1$—$C_{10}$ halogénés ou non, les symboles W, identiques ou différents, représentent des radicaux alcoxy ou polyalcoxy de formules $Z^3O$, $Z^3OE^2O$—, dans lesquelles le symbole $Z^3$ représente un radical alkyle en $C_1$—$C_4$, le symbole $E^2$ un radical alkylène en $C_2$—$C_4$, le symbole h représente zéro ou un et le symbole p un nombre ayant une valeur suffisante pour obtenir une viscosité de 700 à 1 000 000 de mPa.s à 25°C.

($B^3$): 0 à 15 parties d'un polyalcoxysilane de formule $M_hSiW_{4-h}$ dans laquelle les symboles W, M et h ont la signification des symboles W, M et h du polymère diorganopolysiloxanique ($A^3$).

($C^3$): 0 à 250 parties de charges minérales.

($D^3$): 0 à 20 parties de composés choisis dans le groupe constitué:

1. des amines organiques primaires, secondaires ayant un pKb en milieu aqueux inférieur à 5, des aminoorganosilanes, aminoorganopolysiloxanes et guanidinoorganosilanes portant par molécule à la fois:

(i) au moins un groupe organique en $C_1$—$C_{15}$ lié par une liaison SiC à l'atome de silicium et substitué par au moins un radical amino ou un radical guanidino

(2i) et au moins un radical alcoxy en $C_1$—$C_5$ ou un radical alcoxyalkylène-oxy en $C_3$—$C_6$.

2. des dérivés organiques du titane et du zirconium portant des groupes organoxy et/ou β-(dicétonato).

Le polymère diorganopolysiloxane ($A^3$) est préparé par mise en contact d'un polymère α-ω-dihydroxydiorganopolysiloxane de formule:

$$HO(T_2)Si(OSiT_2)_{p-2}OSi(T_2)OH$$

avec le polyalcoxysilane ($B^3$) de formule $M_hSiW_{4-h}$ à raison d'au moins deux moles du polyalcoxysilane pour une mole du polymère α-ω-dihydroxydiorganopolysiloxane.

La réaction peut avoir lieu en présence d'une amine organique (brevet américain 3 542 901), d'un dérivé organique du titane (brevet américain 4 111 890), d'une hydroxylamine N—N disubstituée (brevet français 2 508 467).

Le symbole T de la formule du polymère ($A^3$) a la signification du symbole T de la formule $T_2SiO$ des motifs du polymère ($A^1$) précédemment décrit. Les symboles M, W, $Z^3$ et $E^2$, appartenant à la formule du polymère ($A^3$) et à celle du polyalcoxysilane ($B^3$) ont respectivement la signification des symboles M, W, $Z^3$ et $E^2$ de la formule du polyalcoxysilane ($B^2$) décrit ci-avant.

En conséquence l'illustration déjà donnée pour les divers radicaux représentés par les symboles de ($B^2$), convient également pour les radicaux représentés par les symboles de ($A^3$) et de ($B^3$).

A titre illustratif, les polymères diorganopolysiloxanes ($A^3$) peuvent être bloqués, à chaque extrémité de leur chaîne, par des motifs de formules:

$(CH_3O)_2CH_3SiO_{0,5}$

$(CH_3O)_3SiO_{0,5}$

$(CH_3OCH_2CH_2O)_2CH_3SiO_{0,5}$

$(CH_3CH_2OCH_2CH_2)_2CH_3SiO_{0,5}$

$(CH_3OCH_2CH_2O)_3SiO_{0,5}$

$$\begin{array}{l} CH_3OCH_2CH(CH_3)O \\ \qquad\qquad\qquad\qquad \diagdown \\ \qquad\qquad\qquad\qquad\quad SiO_{0,5} \\ \qquad\qquad\qquad\qquad \diagup \\ \qquad\qquad\quad (CH_3O)_2 \end{array}$$

$$\begin{array}{l} CH_3OCH(CH_3){-\!\!-}CH_2O \\ \qquad\qquad\qquad\qquad \diagdown \\ \qquad\qquad\qquad\qquad\quad SiO_{0,5} \\ \qquad\qquad\qquad\qquad \diagup \\ \qquad\qquad\quad (CH_3O)_2 \end{array}$$

Les motifs de la chaîne répondent par exemple aux formules:

$(CH_3)_2SiO$

$CH_3(CH_2{=}CH)SiO$

$(C_6H_5)_2Sio$

$CH_3(CF_3CH_2CH_2)SiO$

Le polyalcoxysilane ($B^3$), utilisé à raison de 0 à 15 parties pour 100 parties du polymère ($A^3$), de préférence 0,5 à 13 parties, est semblables au polyalcoxysilane ($B^2$); ainsi les formules citées à titre d'exemples pour ($B^2$) conviennent pour le polyalcoxysilane ($B^3$).

Les charges minérales ($C^3$) sont identiques aux charges ($C^1$) précédemment décrites. Elles sont utilisées à raison de 0 à 250 parties, de préférence 5 à 200 parties pour 100 parties de polymère ($A^3$).

Les composés ($D^3$) sont utilisés à raison de 0 à 20 parties, de préférence 2 à 18 parties pour 100 parties de polymère ($A^3$). Ils comprennent en particulier les amines organiques primaires et secondaires, les aminoorganosilanes, les aminoorganopolysiloxanes et les dérivés organiques du titane et du zirconium, ces composés sont semblables aux composés ($D^2$) précédemment décrits, en conséquence la description établie pour les composés ($D^2$) convient également pour les composés ($D^3$). Les composés ($D^3$) comprennent en outre les guanidinoorganosilanes et guanidinoorganopolysiloxanes décrits, par exemple, dans le brevet américain 4 180 642.

A titre d'exemples concrets de ces guanidinoorganosilanes et siloxanes peuvent être cités ceux de formules:

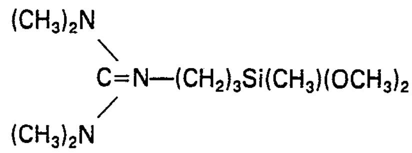

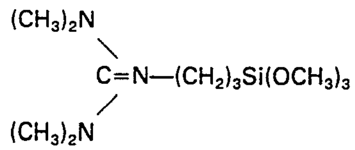

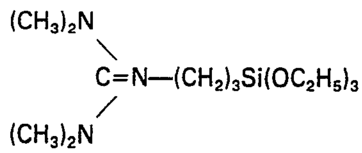

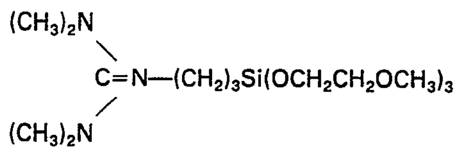

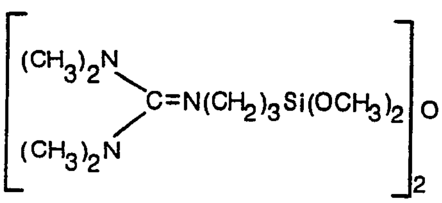

L'ensemble des 3 types de bases mono-composantes venant d'être décrits sont catalysés par l'incorporation du dérivé organique de l'étain, conforme à l'invention, provenant du mélange du dérivé chelaté avec le dérivé non chelaté. La quantité utilisée du dérivé organique de l'étain pour 100 parties de la base composante est de l'ordre de 0,0001 à 5 parties, de préférence 0,001 à 4,5 parties.

En dehors des bases mono-composantes peuvent être utilisées des bases bi-composantes qui durcissent dès l'incorporation du dérivé organique de l'étain. Elles sont conditionnées après incorporation du catalyseur à l'étain en deux fractions séparées, l'une des fractions pouvant ne renfermer par exemple que le catalyseur à l'étain ou en mélange avec l'agent réticulant.

Ces bases sont formées par mélange de:

($A^4$): 100 parties d'un polymère α-ω-dihydroxydiorganopolysiloxane de viscosité 700 à 1 000 000 de mPa.s à 25°C.

($B^4$): 1 à 20 parties:

(i) d'un silane de formule $(R^{17})_kSi(OR^{16})_{4-k}$ dans laquelle les symboles $R^{16}$, identiques ou différents, représentent des radicaux alkyles en $C_1$—$C_8$, des radicaux alcoxyalkylènes en $C_3$—$C_6$, le symbole $R^{17}$ représente un radical hydrocarboné en $C_1$—$C_{10}$, le symbole k représente zéro ou un, ou

(2i) les produits d'hydrolyse partielle du silane de formule $Si(OR^{16})_4$ dans laquelle le symbole $R^{16}$ a la signification donnée sous (i).

($C^4$): 0 à 150 parties de charges minérales.

Le polymère α-ω-dihydroxydiorganopolysiloxane ($A^4$) est semblable au polymère α-ω-dihydroxydiorganopolysiloxane ($A^1$) décrit précédemment pour la préparation des bases mono-composantes.

Ce polymère ($A^4$) a une viscosité de 700 à 1 000 000 de mPa.s à 25°C, de préférence 1 000 à 800 000 mPa.s à 25°C; les radicaux organiques liés aux atomes de silicium sont de préférence des radicaux méthyle, éthyle, propyle, vinyle, phényle. Généralement sont choisis des copolymères portant au moins 80% de radicaux méthyle.

Le silane ($B^4$) de formule $R_k^{17}Si(OR^{16})_{4-k}$ est utilisé à raison de 1 à 20 parties, de préférence 2 à 15 parties pour 100 parties des polymères ($A^4$).

Les symboles $R^{16}$ représentent:

des radicaux alkyles en $C_1$—$C_8$ tels que les radicaux méthyle, éthyle, propyle, butyle, pentyl, éthyl-2 hexyle.

des radicaux alcoxyalkylènes en $C_3$—$C_6$ tels que ceux de formules:

$CH_3OCH_2CH_2$—

$CH_3OCH_2CH(CH_3)$—

$CH_3OCH(CH_3)CH_2$—

$C_2H_5OCH_2CH_2CH_2$—

Le symbole $R^{17}$ représente un radical hydrocarboné en $C_1$—$C_{10}$ englobant:

les radicaux alkyles en $C_1$—$C_{10}$ tels que les radicaux méthyle, éthyle, propyle, butyle, pentyle, éthyl-2 hexyle, octyle, décyle.

les radicaux vinyle, allyle,

les radicaux cycloalkyles en $C_5$—$C_8$ tels que les radicaux cyclopentyle, cyclohexyle.

les radicaux aryles mononucléaires en $C_6$—$C_8$ tels que les radicaux phényle, tolyle, xylyle.

Les produits d'hydrolyse partielle du silane de formule $Si(OR^{16})_4$ sont constitués, en majeure partie de motifs de formule $(R^{16}O)_2SiO$, les autres motifs ayant pour formules $(R^{16}O)_3SiO_{0,5}(R^{16}O)SiO_{1,5}$, $SiO_2$.

Ces produits d'hydrolyse partielle, appelés, habituellement polysilicates d'alkyle ont la faculté de se dissoudre dans les solvants hydrocarbonés usuels tels que le toluène, le xylène, le cyclohexane, le méthylcyclohexane; le produit le plus couramment utilisé est le polysilicate d'éthyl 40 ayant une teneur en silice de 40%, valeur obtenue après hydrolyse totale des radicaux $OC_2H_5$.

Comme exemples concrets de silanes de formule $R_k^{17}Si(RO^{16})_{4-k}$ peuvent être désignés ceux de formules:

$CH_3Si(OCH_3)_3$

$CH_3Si(OC_2H_5)_3$

$C_2H_5Si(OCH_3)_3$

$CH_2{=}CHSi(OCH_3)_3$

$CH{=}CHSi(OCH_2CH_2OCH_3)_3$

$C_6H_5Si(OCH_3)_3$

$CH_3Si(OCH_3)_2[OCH(CH_3)CH_2OCH_3]$

$Si(OCH_3)_4$

$Si(OC_2H_5)_4$

$Si(O\ n{-}C_3H_7)_4$

$Si(O\ n{-}C_4H_9)_4$

Les charges ($C^4$) sont utilisées à raison de 0 à 150 parties, de préférence 5 à 120 parties, pour 100 parties des polymères ($A^4$). Elles sont identiques aux charges déjà décrites ($C^1$) utilisées pour la préparation de bases mono-composantes.

Les bases bi-composantes sont catalysées, comme déjà indiqué, par addition du dérivé organique de l'étain provenant du mélange du dérivé chelaté avec le dérivé non chelaté; la quantité utilisée est de l'ordre de 0,01 à 10 parties, de préférence 0,1 à 8 parties, pour 100 parties de la base bi-composante.

Outre les constituants fondamentaux des bases mono-composantes et bi-composantes, c'est-à-dire (1) les polymères diorganopolysiloxanes ($A^1$) à ($A^4$) bloqués en fin de chaîne par un radical hydroxylé et/ou des radicaux alcoxyles, (2) les agents réticulants organosiliciques ($B^1$) à ($B^4$) portant des groupes hydrolysables (3) les charges minérales ($C^1$) à ($C^4$) et (4) les agents d'adhérence ($D^1$) les composés ($D^2$) et ($DS^3$), d'autres ingrédients peuvent être introduits.

Parmi ces ingrédients figurent des composés organosiliciques, principalement des polymères, qui ont la faculté d'agir sur les caractéristiques physiques des compositions conformes à l'invention (formées par mélange des bases avec le catalyseur à l'étain) et/ou sur les propriétés mécaniques des élastomères silicones issus de ces compositions.

Ces composés sont bien connus, ils comprennent par exemple:

des polymères α-ω-bis(triorganosiloxy)diorganopolysiloxanes de viscosité d'au moins 10 mPa.s à 25°C dont les radicaux organiques liés aux atomes de silicium sont choisis parmi les radicaux méthyle, vinyle, phényle, de préférence au moins 80% des radicaux sont des radicaux méthyle et au plus 3% sont des radicaux vinyle; de préférence sont utilisées des huiles α-ω-bis(triméthylsiloxy)diméthylpolysiloxanes de viscosité 10 mPa.s à 25°C à 1 500 mPa.s à 25°C.

des polymères méthylpolysiloxanes ramifiés, liquides, renfermant de 0,1 à 8% de groupes hydroxyle liés aux atomes de silicium, formés de motifs $(CH_3)_3SiO_{0,5}$, $(CH_3)_2SiO$, $CH_3SiO_{1,5}$ répartis de manière à conduire à un rapport $(CH_3)_3SiO_{0,5}/(CH_3)_2SiO$, de 0,01 à 0,15 et à un rapport $CH_3SiO_{1,5}/(CH_3)_2SiO$ de 0,1 à 1,5.

des huiles α-ω-di(hydroxy)diméthylpolysiloxanes de viscosité 10 à 300 mPa.s à 25°C et des huiles α-ω-di(hydroxy)méthylphénylpolysiloxanes de viscosité 200 à 1 000 mPa.s à 25°C.

du diphénylsilanediol, du tétraméthyl-1,1,3,3-disiloxanediol.

Les polymères α-ω-bis(triorganosiloxy)diorganopolysiloxanes précédents peuvent être remplacés totalement ou partiellement par des composés organiques inertes vis-à-vis des divers constituants des bases et miscibles au moins avec les polymères diorganopolysiloxanes ($A^1$) à ($A^4$). Comme exemples concrets de ces composés organiques peuvent être mentionnés les polyalcoylbenzènes obtenus par alcoylation du benzène à l'aide d'oléfines à longue chaîne, en particulier les oléfines à 12 atomes de carbone issues de la polymérisation du propylène. Des composés organiques de ce type figurent par exemple dans les brevets français 2 392 476 et 2 446 849.

Chacun des composés organosiliciques ci-avant peut être utilisé à raison de 1 à 100 parties, de préférence 3 à 75 parties, pour 100 parties de diorganopolysiloxanes ($A^1$) à ($A^4$).

Des ingrédients non organosiliciques peuvent aussi être introduits, par exemple, des stabilisants thermiques. Ces composés améliorent la résistance à la chaleur des élastomères silicones. Ils peuvent être choisis parmi les sels d'acides carboxyliques, oxydes et hydroxydes de terres rares, et plus spécialement les oxydes et hydroxydes cériques ainsi que parmi le bioxyde de titane de combustion et les divers oxydes de fer. On emploie avantageusement de 0,1 à 15 parties, de préférence de 0,15 à 12 parties de stabilisants thermiques pour 100 parties des diorganopolysiloxanes ($A^1$) à ($A^4$).

Pour fabriquer les compositions conformes à l'invention, il est nécessaire dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités.

Tous ces ingrédients peuvent être chargés dans l'appareillage selon un ordre quelconque d'introduction. Ainsi il est possible de mélanger tout d'abord les polymères diorganopolysiloxanes ($A^1$) à ($A^3$) et les charges ($C^1$ à $C^3$) et d'ajouter ensuite à l'empâtage obtenu les réticulants ($B^1$) à ($B^3$) les composés ($D^1$) à ($D^3$) et le dérivé organique de l'étain.

Il est également possible de mélanger les polymères ($A^1$) à ($A^3$), les réticulants ($B^1$) à ($B^3$), les composés ($D^1$) à ($D^3$) et d'ajouter ultérieurement, les charges ($C^1$) à ($C^3$) et le dérivé organique de l'étain. Au cours de ces opérations, les mélanges peuvent être chauffés à une température comprise dans l'intervalle 50—180°C sous la pression atmosphérique ou sous une pression réduite afin de favoriser le départ de matières volatiles telles que de l'eau, des polymères de bas poids moléculaires.

Les compositions ainsi préparées peuvent être utilisées telles quelles ou sous la forme de dispersion dans des diluants organiques. Ces diluants sont, de préférence, des produits usuels commercialisés, choisis parmi:

les hydrocarbures aliphatiques, cycloaliphatiques, aromatiques, halogénés ou non, tels que le n-heptane, le n-octane, le cyclohexane, le méthylcyclohexane, le toluène, le xylène, le mesitylene, le cumène, la tétraline, la décaline, le perchloroéthylène, le trichloroéthane, le tétrachloroéthane, le chlorobenzène, l'orthodichlorobenzène.

les cétones aliphatiques et cycloaliphatiques telles que la méthyléthylcétone, la méthylisobutylcétone, la cyclohexanone, l'isophorone.

les esters tels que l'acétate d'éthyle, l'acétate de butyle, l'acétate d'éthylglycol.

Les quantités de diluants introduites doivent être suffisantes pour obtenir des dispersions stables s'étalant facilement sur les substrats. Ces quantités dépendent essentiellement de la nature et de la viscosité des compositions organopolysiloxanes de départ. Elles peuvent donc varier dans de larges proportions; néanmoins il est recommandé de fabriquer des dispersions contenant de 15 à 85% en poids de diluants.

Les compositions mono-composantes, conformes à l'invention, utilisées telles quelles, c'est-à-dire non diluées, ou sous forme de dispersions dans des diluants, sont stables au stockage en l'absence d'eau et durcissent dès la température ambiante (après départ des solvants dans le cas des dispersions) en présence d'eau pour former des élastomères.

Après le dépôt des compositions telles quelles, sur des substrats solides, en atmosphère humide, on constate qu'un processus de durcissement en élastomères se met en oeuvre, il s'effectue de l'extérieur à l'intérieur de la masse déposée. Une peau se forme d'abord en surface puis la réticulation se poursuit en profondeur.

La formation complète de la peau, qui se traduit par un toucher non collant de la surface, demande une période de temps pouvant être comprise dans l'intervalle allant de 1 minute à 55 minutes; cette période

dépend du taux d'humidité relative de l'atmosphère entourant les compositions et de la faculté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Cette période de temps plus longue peut se situer entre 10 minutes et 20 heures.

Les compositions mono-composantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabricaation d'objets en résines ou mousses synthétiques.

Les dispersions précitées de ces compositions dans les diluants sont utilisables pour l'imprégnation en couches minces de produits et articles minéraux, synthétiques, organiques, métalliques, tissés ou non-tissés, l'enduction de feuilles en métal ou en matières plastiques ou cellulosiques. Le dépôt peut avoir lieu par exemple au trempé ou par pulvérisation; dans ce dernier cas, on se sert d'un pistolet à peintures qui permet l'obtention de revêtements homogènes d'épaisseur 5 à 300 µm. Après la projection des dispersions, les diluants s'évaporent et les compositions libérées durcissent en un film caoutchouteux.

La fabrication des compositions bi-composantes conformes à l'invention s'effectue également par mélange des divers constituants dans des appareils appropriés. Pour obtenir des compositions homogènes, il est préférable de mélanger tout d'abord les polymères ($A^4$) avec les charges ($C^4$); l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants ($B^4$), le dérivé organique de l'étain et éventuellement des additifs et adjuvants divers et même de l'eau.

De telles compositions ne sont pas stables au stockage, elles doivent dont être employées rapidement par exemple dans un laps de temps de 40 minutes.

Les additifs et adjuvants divers sont les mêmes que ceux introduits dans les compositions mono-compostantes. En particulier il faut mentionner de nouveau les polymères α-ω-bis(triorganosiloxy)diorganopolysiloxanes de viscosité d'au moins 10 mPa.s à 25°C dont les radicaux organiques liés aux atomes de silicium sont choisis parmi les radicaux méthyle, vinyle, phényle. Généralement sont utilisés des huiles α-ω-bis(triméthylsiloxy)diméthylpolysiloxanes de viscosité de préférence à 20 mPa.s à 25°C à 1 000 mPa.s à 25°C.

Pour favoriser le durcissement des compositions bi-composantes, utilisées en couches épaisses, dont l'épaisseur est par exemple supérieure à 2 cm, il est recommandé d'introduire de l'eau à raison d'eau plus 1 partie pour 100 parties des polymères ($A^4$).

Ces apport d'eau n'est pas nécessaire si les charges ($C^4$) en contiennent suffisamment. Pour faciliter son incorporation, l'eau est de préférence ajoutée sous forme d'une dispersion au sein d'un empâtage constitué par exemple des huiles α-ω-bis(triorganosiloxy)diorganopolysiloxanes précitées et des charges ($C^4$).

Les compositions bi-composantes ne peuvent donc renfermer, pour le conditionnement et le stockage, tous les constituants fondamentaux c'est-à-dire les polymères ($A^4$), le réticulant ($B^4$), les charges ($C^4$) et le dérivé organique de l'étain. Sur le plan industriel, elles doivent être fabriquées sous la forme de deux composants, l'un et l'autre étant stables au stockage.

Un premier composant, stable au stockage, peut comporter par exemple les constituants ($A^4$), ($B^4$) et ($C^4$); il est préparé, de préférence, par introduction des agents réticulants ($B^4$) dans le mélange homogène formé par malaxage des polymères ($A^4$) avec les charges ($C^4$).

Le deuxième composant comprend alors le dérivé organique de l'étain.

D'autres modalités de présentation des compositions bi-composantes peuvent être retenues; par exemple un premier composant contenant les polymères ($A^4$) et les charges ($C^4$) et un deuxième composant contenant les agents réticulants ($B^4$) et le dérivé organique de l'étain.

Il est préférable dans de nombreuses applications que les deux composants soient l'un et l'autre suffisamment fluides de manière à former aisément lors de leur mélange des compositions dont la viscosité s'échelonne par exemple de 10 000 à 800 000 mPa.s à 25°C.

Ces compositions qui restent suffisamment fluides pendant au moins 40 minutes, de préférence pendant au moins 80 minutes, après le mélange des deux composants, sont utilisables plus spécialement pour la fabrication de moules en élastomères silicones; elles peuvent cependant être utilisées pour d'autres applications comme l'enrobage de matériels électroniques et l'enduction de surfaces métalliques ou de matières textiles ou cellulosiques.

Les moules fabriqués sont destinés à reproduire des pièces en matériaux cellulaires ou non, constitués de polymères organiques. Parmi ces matériaux peuvent être cités les polyuréthannes, les polyesters, les polyamides, le polychlorure de vinyle. Il est toutefois recommandé d'utiliser ces moules pour le

reproduction de pièces en polyuréthanne, étant donnée qu'ils résistent bien à l'attaque des constituants des mélanges (en particulier des polyisocyanates) conduisant aux matériaux en polyuréthanne.

L'introduction de catalyseur conforme à l'invention, à base de dérivé organique de l'étain permet d'atteindre des conditions de mises en oeuvre optimum pour les compositions mono- et bi-composantes. Elle permet ensuite d'obtenir des élastomères ayant des propriétés dynamométriques stables dans le temps indépendantes de l'âge et des conditions de conservation des compositions.

Exemple 1

On prépare une composition $P_1$ par mélange de:

100 parties d'une huile α,ω-dihydroxydiméthylpolysiloxane de viscosité 10 000 mPa.s à 25°C,

70 parties d'une huile α,ω-(bis)triméthylsiloxy)diméthylpolysiloxane de viscosité 800 mPa.s à 25°C,

55 parties d'une silice de combustion de surface spécifique 300 $m^2/g$ traitée par de l'hexaméthyldisilazane,

50 parties de quartz broyé de diamètre particulaire moyen 5 micromètres,

10 parties d'un empâtage formé de 90 parties de l'huile α,ω-dihydroxydiméthylpolysiloxane, précédemment citée, de viscosité 10 000 mPa.s à 25°C, 5 parties d'une silice de combustion de surface spécifique 150 $m^2/g$ et 5 parties d'eau.

On prépare un système réticulant $C_1$ par mélange, à la température ambiante, de 82,5 parties d'un polysilicate d'éthyle renfermant 40% de silice avec 17,5 parties d'un dérivé organique de l'étain. Le dérivé organique de l'étain est constitué du dilaurate de di-n-butylétain ou du chelate d'étain ($Ch_1$) ou d'une association du dilaurate de di-n-butylétain avec le chelate d'étain ($Ch_1$) de formule:

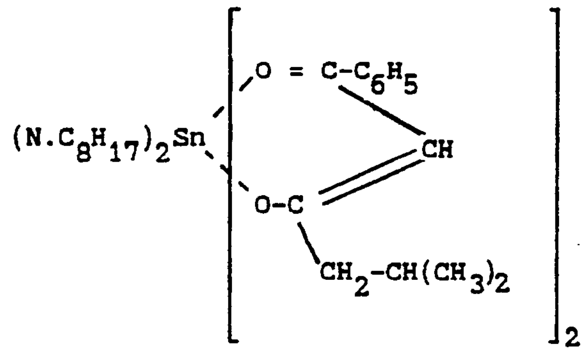

L'association peut contenir pondéralement 75%, 50%, ou 25% de l'un des deux constituants.

On catalyse la composition $P_1$ en mélangeant 100 parties de cette composition avec deux parties du système réticulant $C_1$. Ce dernier est utilisé tel quel, fraîchement préparé, ou bien après avoir subi un vieillissement à 70°C pendant une durée de 66 heures, 185 heures ou 329 heures.

On détermine ensuite le temps d'étalement de la composition catalysée en notant la durée pendant laquelle cette composition présente un état suffisamment fluide pour s'étaler sour son propre poids et ainsi prendre la configuration du volume interne des récipients dans lesquels elle est versée.

Le test mis en oeuvre pour apprécier la faculté d'étalement est le suivant:

La composition fraîchement catalysée (15 grammes) est versée dans une capsule en aluminium, de forme cylindrique de diamètre 4 cm; elle doit présenter, après une période d'au plus 5 minutes, une surface parfaitement horizontale.

La composition catalysée se transforme au bout de plusieurs heures à la température ambiante en un élastomère silicone; 24 heures après la préparation de cette composition catalysée, on mesure la dureté Shore A de l'élastomère formé. Les résultats concernant les temps d'étalement et les duretés Shore A sont rassemblés dans le tableau 1 ci-après:

TABLEAU 1

| Constitution du dérivé organique | Dilaurate de di-n-butylétain | 100 | | 75 | | 50 | | 25 | | 0 | |
|---|---|---|---|---|---|---|---|---|---|---|---|
| "de l'étain (en % en poids) | Chelate d'étain ($Ch_1$) | 0 | | 25 | | 50 | | 75 | | 100 | |
| Durée de vieillissement à 70°C du système réticulant $C_1$ (en heures) | | Temps étal. en min | Dureté Shore A | Temps étal. en min | Dureté Shore A | Temps étal. en min | Dureté Shore A | Temps étal. en min | Dureté Shore A | Temps étal. en min | Dureté Shore A |
| 0 | | 170 | 20 | 184 | 18 | 178 | 18 | 198 | 17 | 300 | 5 |
| 66 | | 190 | 18 | 164 | 18 | 180 | 18 | 190 | 18 | 360 | 5 |
| 185 | | 100 | 20 | 103 | 21 | 146 | 20 | 168 | 19 | 400 | 5 |
| 329 | | 84 | 20 | 85 | 20 | 125 | 20 | 148 | 19 | 400 | 5 |

On constate que les temps d'étalement raccourcissent nettement lorsque la durée de vieillissement, à 70°C, du système réticulant $C_1$ dépasse 66 heures. Toutefois l'ampleur de cette variation est dépendante de la constitution du dérivé organique de l'étain. Si ce dérivé est du dilaurate di di-n-butylétain, on relève après 329 heures à 70°C, une chute de 50% du temps d'étalement; si ce dérivé est un mélange de 25% de dilaurate de di-n-butylétain et de 75% de chelate d'étain ($Ch_1$), la chute est très atténué et ne dépasse guère 25%. En absence de dilaurate de di-n-butylétain on constate que la dureté Shore A est très nettement insuffisante pour la prise à coeur.

Exemple 2

On prépare une composition $P_2$ par mélange de:

100 parties d'une huile α-ω-dihydroxydiméthylpolysiloxane de viscosité 20 000 mPa.s à 25°C,

100 parties d'une huile α-ω-bis(triméthylsiloxy)diméthylpolysiloxane de viscosité 500 mPa.s à 25°C,

50 parties d'une silice de combustion de surface spécifique 200 $m^2/g$ traitée par de l'hexaméthyldisilazane,

100 parties de quartz broyé de diamètre particulaire moyen 5 μm,

15 parties de l'empâtage renfermant 5% d'eau, déjà utilisé comme constituant de la composition de l'exemple 1.

On catalyse la composition $P_2$ en mélangeant 100 parties de cette composition avec 2 parties d'une systéme réticulant $C_2$ analogue au système réticulant $C_1$ utilisé à l'exemple 1, c'est-à-dire formé de 82,5 parties de polysilicate d'alkyle et 17,5 parties d'un dérivé organique de l'étain. Le dérivé organique de l'étain est constitué du dilaurate de di-n-butylétain ou d'une association comportant pondéralement 50% de dilaurate de di-n-butylétain, 35% de chelate d'étain ($Ch_1$) de formule:

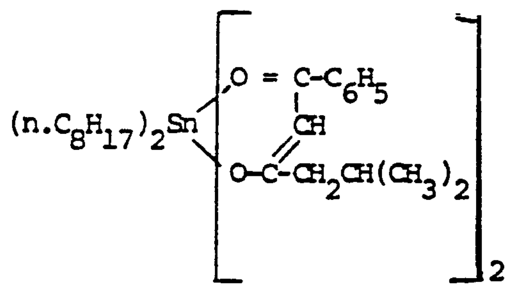

et 15% du chelate d'étain $(Ch)_2$ de formule:

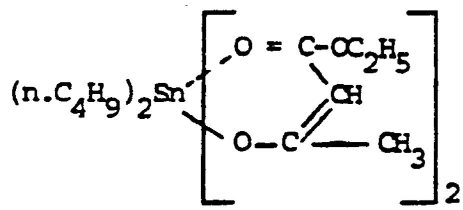

Le réticulant $C_2$ est utilisé tel quel, fraîchement préparé, ou bien après avoir subi un vieillissement à 75°C pendant 2, 6, 9, 10 et 12 jours.

On détermine le temps d'étalement de la composition catalysée de la manière indiquée à l'exemple 1; on détermine en outre la dureté Shore A de l'élastomère silicone obtenu 24 heures après la formation de la composition catalysée. Les résultats sont rassemblés dans le tableau 2 ci-après.

TABLEAU 2

| Constitution du dérivé organique de l'étain (en % en poids) | | | | | |
|---|---|---|---|---|---|
| | Dilaurate de di-n-butylétain | 100 | | 50 | |
| | Chelate étain ($Ch_1$) | 0 | | 35 | |
| | Chelate étain ($Ch_2$) | 0 | | 15 | |
| Durée de vieillissement à 70°C du système réticulant $C_2$ (en jours) | | Temps étal. en min | Dureté Shore A | Temps étal. en min | Dureté Shore A |
| 0 | | 60 | 16 | 64 | 17 |
| 2 | | 66 | 17 | 79 | 14 |
| 6 | | 37 | 18 | 67 | 17 |
| 9 | | | | 55 | 17 |
| 10 | | 24 | 18 | | |
| 12 | | 20 | 18 | 45 | 17 |

On constate que les temps d'étalement raccourcissent lorsque la durée de vieillissement du système réticulant atteint 6 jours ou les dépasse. Cette chute est très importante, de l'ordre de 70% au bout de 12 jours, dans le cas de l'utilisation d'un dérivé organique de l'étain comportant le dilaurate de di-n-butylétain; elle est seulement de 30% dans le cas de l'utilisation d'un dérivé mixte comportant l'association du dilaurate de di-n-butylétain avec 2 chelates de diorganoétain.

Exemple 2bis

On catalyse 100 parties de la composition $P_1$ utilisée à l'exemple 1 avec 5 parties d'un système réticulant $C_3$ analogue au système réticulant $C_1$ utilisé à l'exemple 1, le dérivé organique de l'étain est constitué du dilaurate de di-n-butylétain et à son association dans le rapport pondéral 50/50 avec le chelate $Ch_1$ de formule:

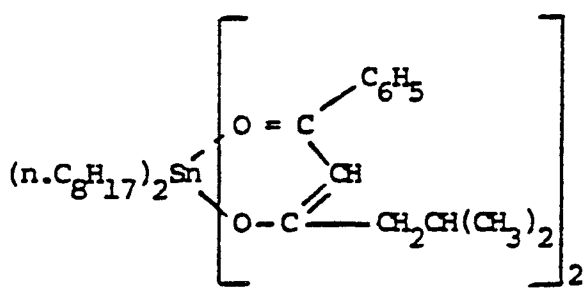

On dépose la composition catalysée sur une plaque en polyéthylène, sous la forme d'une couche de 2 mm d'épaisseur. Après une période de repos de 24 heures à l'air ambiant on démoule la pellicule d'élastomère fournie et on la laisse vieillir à une température de 20°C pendant un certain nombre variable de jours.

On mesure la dureté Shore A (DSA) et la résistance à la déchirure (R/D (exprimée en KN/m) de la pellicule ayant subi les périodes de vieillissement précitées.

Les résultats sont rassemblés dans le tableau 3 ci-après:

TABLEAU 3

| Constitution du dérivé organique de l'étain (en % en poids) | Dilaurate de di-n-butylétain | 100 | | 50 | |
|---|---|---|---|---|---|
| | Chelate étain ($Ch_1$) | 0 | | 50 | |
| Durée de vieillissement des pellicules de 2 mm d'épaisseur à 25°C | | DSA | R/D | DSA | R/D |
| 1 jour | | 26 | — | 26 | — |
| 10 jours | | 37 | 11 | 38 | 13 |
| 30 jours | | 32 | 14 | 33 | 13 |
| 60 jours | | 39 | 7,5 | 38 | 11 |
| 90 jours | | 39 | 7 | 38 | 9 |
| 150 jours | | 39 | 6 | 38 | 9 |

On constate au bout de 60 jours de vieillissement des élastomères à la température ambiante une diminution nette de la valeur de la résistance à la déchirure dans le cas de l'utilisation d'un dérivé organique de l'étain constitué uniquement du dilaurate de di-n-butylétain. Cette diminution n'a pas lieu avec l'emploi de l'association pondérale 50/50 dilaurate de dibutylétain/chelate d'étain ($Ch_1$).

Exemple 3

On prépare un système réticulant $C_4$ analogue au système réticulant $C_1$, décrit à l'exemple 1, par mélange à la température ambiante de 82,5 parties d'un polysilicate d'éthyle renfermant 40% de silice avec 17,5 parties d'un dérivé organique de l'étain. Ce dérivé est constitué d'un diversatate de di-n-butylétain, (l'acide versatique est un acide monocarboxylique de synthèse, saturé, tertiaire en alpha du groupe carboxyle, constitué d'un mélange d'acides en $C_9$, $C_{10}$ et $C_{11}$) ou de l'association, dans le rapport pondéral 50/50 de ce diversate de di-n-butylétain avec le chelate $Ch_1$ de formule:

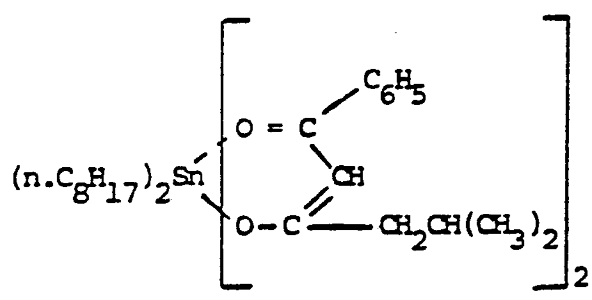

On catalyse ensuite la composition $P_1$, décrite à l'exemple 1, en mélangeant 100 parties de cette composition avec 5 parties du sytème réticulant $C_4$; on détermine le temps d'étalement de la composition catalysée de la manière indiquée à l'exemple 1. On détermine en outre deux duretés Shore A de l'élastomère silicone issu du durcissement de la composition catalysée en effectuant des mesures sur une face d'un échantillon d'élastomère, ayant durci en l'absence d'air et sur une autre face ayant durci à l'air ambiant. L'échantillon est obtenu par coulée de la composition catalysée, sur une hauteur de 4 cm, dans un flacon cylindrique en aluminium de diamètre 4 cm, coulée suivie du durcissement en élastomère. On démoule au bout de 24 heures et on mesure sur l'échantillon d'élastomère la dureté Shore A de la face confinée qui était en contact avec le fond du flacon en aluminium et la dureté Shore A de la face qui était exposée à l'air ambiant.

Par ailleurs on laisse vieillir à 20°C d'autres types d'échantillons qui sont des pellicules d'élastomère de 2 mm d'épaisseur formées selon la mode opératoire décrit à l'exemple 2bis. On mesure la dureté Shore

(DSA) et la résistance à la déchirure R/D (exprimée en Kn/m) des échantillons ayant subi les périodes de vieillissement de 10, 30, 60, 90 et 150 jours.

Les résultats sont rassemblés dans les tableaux 4 et 5 ci-après:

TABLEAU 4

| Constitution du dérivé organique de l'étain en % en poids | Diversatate de di-n-butylétain<br>Chelate $Ch_1$ | 50<br>50 | 100<br>0 |
|---|---|---|---|
| Propriétés mesurées:<br>temps d'étalement en minutes: | | 35 | 40 |
| dureté Shore A, face confinée: | | 14 | 7 |
| dureté Shore A, face exposée à l'air ambiant: | | 25 | 13 |

TABLEAU 5

| Mélange Catalytique (en % poids) | Diversatate de di-n-butylétain | 100 | | 50 | |
|---|---|---|---|---|---|
| | Chelate ($Ch_1$) | 0 | | 50 | |
| Durée de vieillissement (en jours) | | DSA | R/D | DSA | R/D |
| 10 jours | | 32 | 21 | 36 | 24 |
| 30 jours | | 31 | 20 | 33 | 22 |
| 60 jours | | 33 | 16 | 38 | 19,5 |
| 90 jours | | 34 | 15 | 38 | 20 |
| 150 jours | | 34 | 10 | 38 | 14,5 |

On remarque que le diversatate de di-n-butylétain, employé seul ne permet pas d'obtenir au bout de 24 heures un élastomère de dureté Shore A acceptable, en particulier la face confinée, à peine vulcanisée après 24 heures ne peut subir sans se déchirer, des manipulations normales de démoulage.

Après vieillissement, au bout de 60 jours, il apparaît que le diversatate de di-n-butylétain seul conduit à un élastomère ayant une DSA et surtout une R/D plus faibles que celles obtenues avec son association avec le chelate $Ch_1$.

Exemple 4

On triture dans un malaxeur:

100 parties d'une huile α-ω-dihydroxydiméthylpolysiloxane de viscosité 175 000 mPa.s à 25°C,

20 parties d'une huile bis(triméthylsiloxy)diméthylpolysiloxane de viscosité 100 mPa.s à 25°C,

60 parties de carbonate de calcium, de diamètre particulaire moyen 5 micromètres,

10 parties de silice de combustion de surface spécifique 150 $m^2/g$.

Lorsque la masse est homogène, on lui ajoute la totalité de la solution provenant du mélange de 5,5 parties de silane de formule $Si(OCH_2CH_2OCH_3)_4$, — 2,5 parties de silane de formule $(CH_3O)_3Si(CH_2)_3NH—CH_2CH_2NH_2$ — 0,035 partie du dérivé organique de l'étain, lequel est préparé par mélange dans le rapport molaire 50/50 du dilaurate de dibutylétain avec le chelate d'étain ($Ch_3$) de formule:

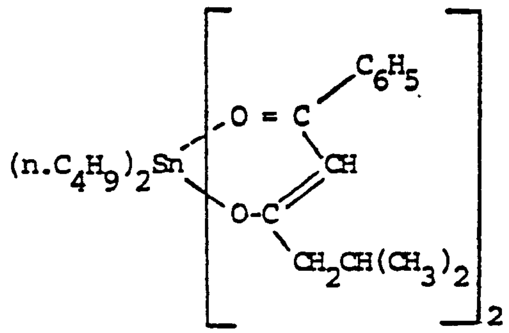

La composition mono-composante ainsi obtenue est conservée à l'abri de l'humidité dans des tubes étanches en aluminium; une autre composition est préparée identique à la précédente sauf que l'on utilise comme dérivé organique de l'étain uniquement le dilaurate de dibutylétain, la quantité utilisée est identique soit 0,035 partie.

Cette composition est également conditionnée dans des tubes étanches en aluminium. On verifié la stabilité au stockage des deux compositions; à cet effet, on abandonne les tubes les contenant pendant 72 heures dans une étuve portée à 100°C.

On laisse refroidir les tubes et étale leur contenu (ainsi que le contenu des tubes n'ayant pas été soumis à une période de chauffage, en présentant une durée de stockage de 1 mois à la température ambiante) sous forme d'une couche de 2 mm d'épaisseur, à l'air libre, sur une plaque en polytétrafluoroéthylène. La couche déposée se transforme en un film caoutchouteux; 24 heures après le dépôt de la couche, on enlève le film d'élastomère et mesure après un vieillissement de 7 hours à la température ambiante, les propriétés dynamométriques des élastomères.

Les résultants sont rassemblés dans le tableau 6 ci-après:

TABLEAU 6

| Propriétés dynamométriques | Compositions catalysées par le dérivé de l'étain provenanat du mélange du dilaurate de di-n-butylétain avec le chelate $Ch_3$ | | Compositions catalysées par le dilaurate de di-n-butylétain | |
|---|---|---|---|---|
| | contenu des tubes conservé à la température ambiante | contenu des tubes vieilli 72 heures à 100°C | contenu des tubes conservé à la température ture ambiante | contenu des tubes vieilli 72 heures à 100°C |
| Dureté Shore A | 16 | 15 | 15 | 9 |
| Résistance à la rupture en MPa | 1,25 | 1,05 | 1 | 0,7 |
| Allongement à la rupture en % | 630 | 490 | 650 | 530 |

L'examen des valeurs des propriétés dynamométriques montre clairement qu'il est avantageux pour la conservation de ces propriétés dans le temps, d'utiliser le mélange catalytique dilaurate de di-n-butylétain/chelate ($Ch_3$) plûtot que la seul dilaurate de di-n-butylétain.

**Revendications**

1. Composition organopolysiloxane comprenant une base apte à durcir un élastomère silicone, dès la température ambiante, et un catalyseur de durcissement de la classe des dérivés organiques de l'étain, caractérisée en ce que le catalyseur est un mélange d'un bis(β-dicétonate) de diorganoétain avec un dérivé organique de l'étain de valence IV, exempt de fonction β-dicétonato, et possédant au moins un atome d'étain, chaque atome d'étain portant deux radicaux organiques liés par une liaison Sn—C, les deux autres valences étant satisfaites au moyen de radicaux choisis parmi les radicaux organiques ou inorganiques liés par une liaison SnO, SnS, par des atomes d'halogènes, par des groupes hydroxy et par des atomes d'oxygène.

2. Composition organopolysiloxane selon la revendication 1, caractérisée en ce que le mélange de catalyseur comporte, en prenant en compte la totalité des deux dérivés organiques de l'étain, de 0,1 à 99,9, de préférence de 10 à 90% en poids du bis(β-dicétonate) de diorganoétain et de 99,9% à 0,1, de préférence de 90 à 10% en poids du dérivé organique de l'étain de valence IV exempt de fonction β-dicétonato.

3. Composition organopolysiloxane selon la revendication 1 ou 2, caractérisée en ce que le bis(β-dicétonate) de diorganoétain répond à la formule:

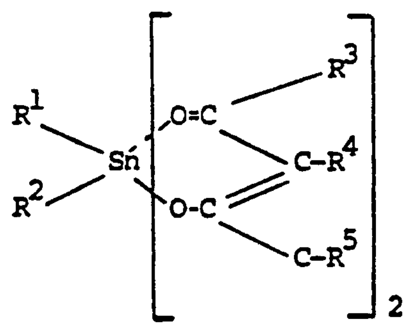

dans laquelle:

$R^1$ et $R^2$, identiques ou différents, représentent des radicaux organiques en $C_1$—$C_{12}$,

$R^3$ et $R^5$, identiques ou différents, ont la signification de $R^1$ et $R^2$ et représentent en outre des atomes d'hydrogène, des radicaux cyanoalkyle ayant la partie alkyle en $C_2$—$C_4$, des radicaux cyanoalcoxy ayant la partie alcoy en $C_1$—$C_5$,

$R^4$ représente l'atome d'hydrogène, un radical hydrocarboné, halogéné ou non, en $C_1$—$C_8$,

$R^4$ en se couplant avec $R^5$ représente un radical hydrocarboné cyclique en $C_5$—$C_{12}$, substitué ou non par des radicaux chloro, nitro, cyano.

4. Composition organopolysiloxane selon la revendication 3, caractérisée en ce que $R_1$ et $R_2$ représentent des radicaux alkyle halogéné ou non en $C_1$—$C_{12}$.

5. Composition organopolysiloxane selon la revendication 4, caractérisé en ce que le bis(β-dicétonate) de diorganoétain est choisi parmi les produits de formules:

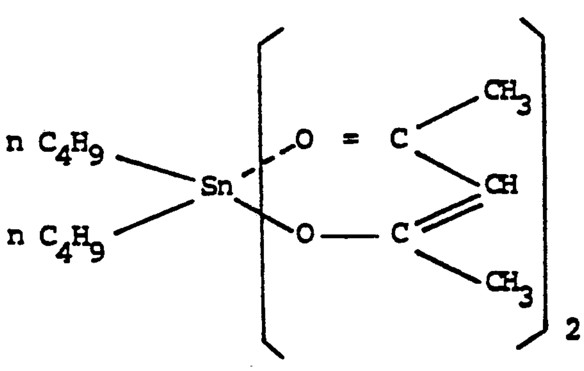

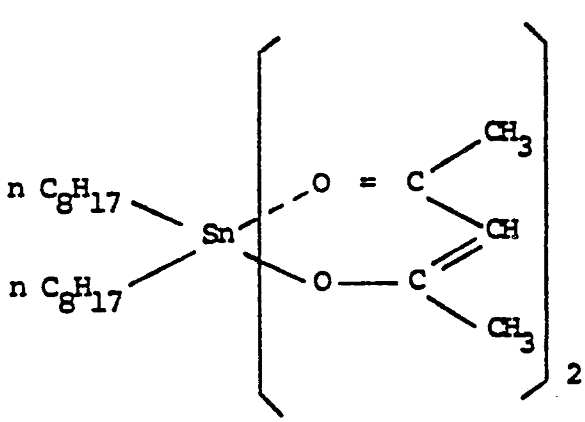

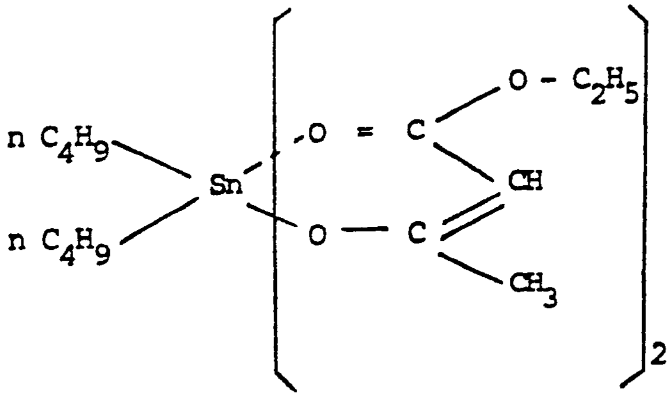

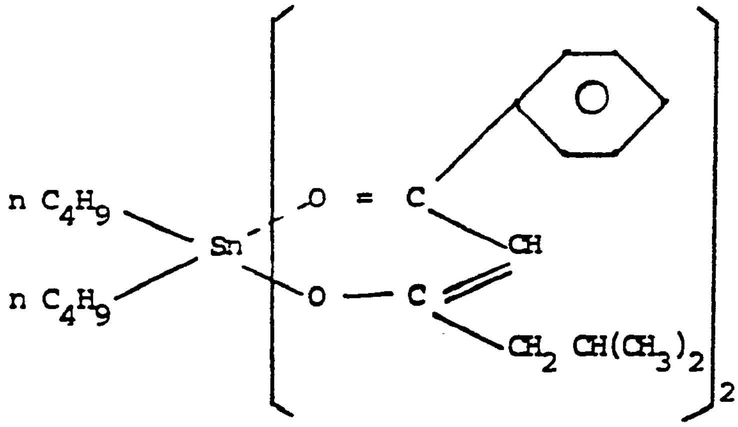

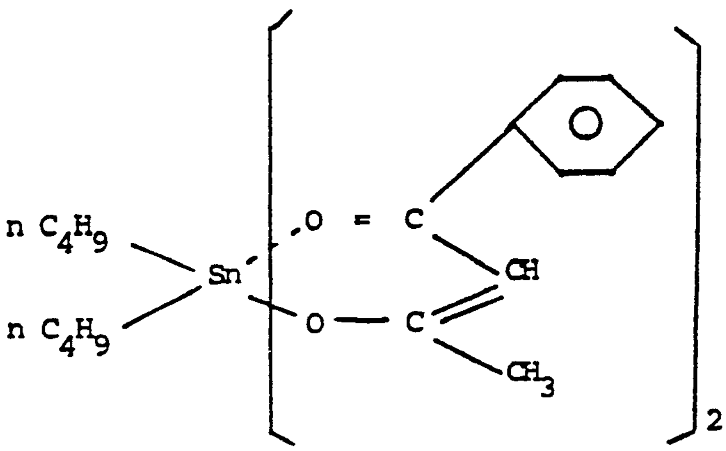

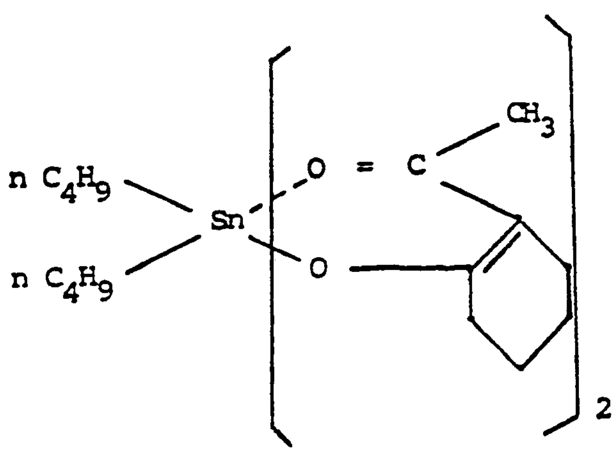

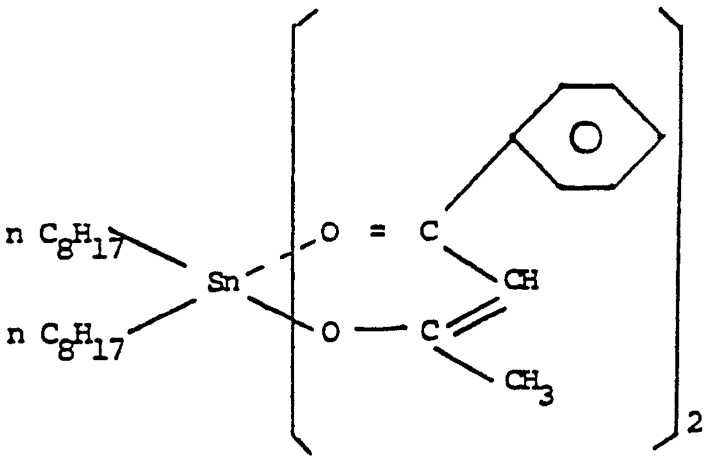

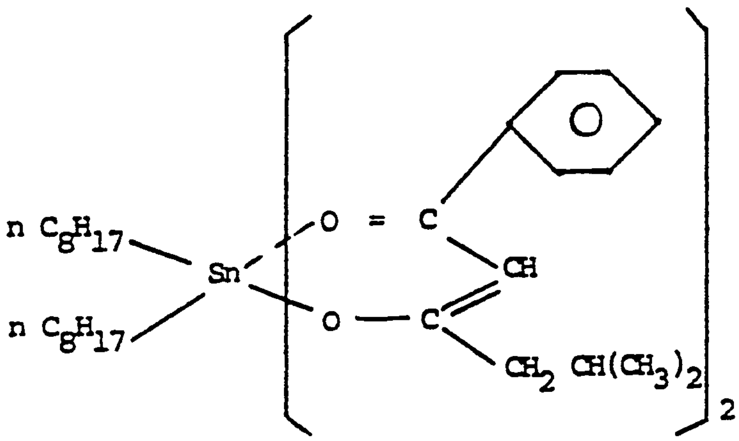

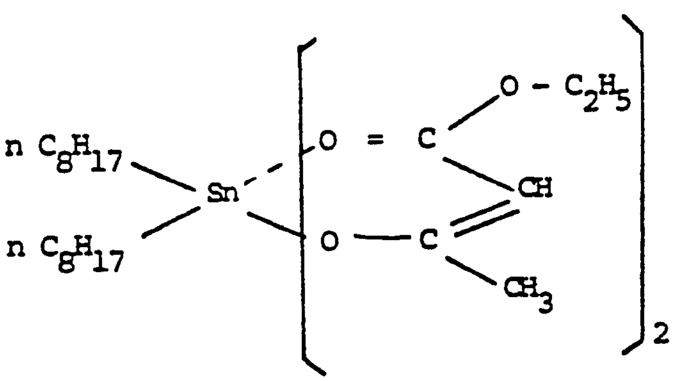

6. Composition selon l'une quelconque des revendications 1 à 5, caractérisée en ce que le dérivé organique de l'étain de valence IV, exempt de fonction β-dicétonato, est choisi dans le groupe constitué des composés de formules:

$A_2SnR^6_2$ , $R^6_2SnO$ , $AR^6_2SnOSnR^6_2A$ ,

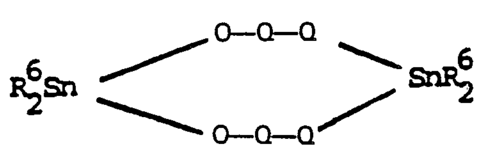

dans lesquelles:

$R^6$ représente un radical hydrocarboné, halogéné ou non, en $C_1$—$C_{20}$,

A représente un radical organique, inorganique, un radical organosilicié ou une chaîne polydiorganosiloxane, lié à l'atome d'étain par une liaison Sn—O ou Sn—S,

un atome d'halogène, un radical hydroxyle,

Q représente un radical alkylène en $C_2$—$C_{10}$.

7. Composition selon la revendication 6, caractérisée en ce que le dérivé organique de l'étain de valence IV exempt de fonction β-dicétano est choisi dans le groupe constitué des composés de formules:

$$A_2SnR_2^6$$

$$R_2^6SnO$$

dans lesquelles les radicaux $R^6$ représentent des radicaux alkyle linéaires ou ramifiés en $C_1$—$C_{20}$, et les radicaux A, sont choisis dans le groupe constitué par:

des radicaux mono-carboxylates de formule $R^7COO$, $R^7$ étant un radical hydrocarboné en $C_1$—$C_{20}$,

des radicaux alcoxy de formule $R^8O$ dans laquelle $R^8$ représente un radical hydrocarboné en $C_1$—$C_8$, et des radicaux centimonoxy de formule

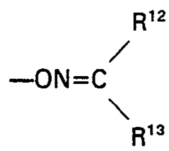

dans laquelle $R^{12}$ et $R^{13}$ représentent des radicaux hydrocarbonés en $C_1$—$C_{10}$,

un radical organosilicié ou une chaîne courte polydiorganosiloxane $R_3{}^7SiO$—(—$R_2{}^7SiO$—$)_n$—, $R_7$ étant un radical hydrocarboné en $C_1$—$C_{20}$.

8. Composition selon la revendication 7, caractérisée en ce que le dérivé organique de l'étain de valence IV exempt de fonction β-dicétano est choisi parmi le dilaurate de di n-butylétain, le dilaurate de di n-octylétain, le diacétate de di n-butylétain, le diacétate de di n-octylétain, le di(éthyl-2)hexanoate de di n-butylétain, le di(éthyl-2)hexanoate de di n-octylétain, le diversate de di n-butylétain et le diversatate de di n-octylétain.

**Patentansprüche**

1. Organopolysiloxanzusammensetzung enthaltend eine Basis, die fähig ist, bereits bei Zimmertemperatur zu Siliconelastomeren zu härten, und einen Härtungskatalysator aus der Klasse der organischen Zinnderivate, dadurch gekennzeichnet, daß der Katalysator ein Gemisch eines Diorganozinn-bis(β-diketonats) mit einem organischen Derivat des Zinns mit der Wertigkeit 4, frei von β-Diketonatofunction, ist und mindestens ein Zinnatom besitzt, wobei jedes Zinnatom zwei organische Reste trägt, die durch eine Sn-C-Bindung verbunden sind, und die beiden anderen Valenzen mittels Resten abgesättigt sind, die unter den organischen oder anorganischen Resten ausgewählt sind, die durch eine SnO-, SnS-Bindung, durch Halogenatome, durch Hydroxygruppen und durch Sauerstoffatome verbunden sind.

2. Organopolysiloxanzusammensetzung gemäß Anspruch 1, dadurch gekennzeichnet, daß das Katalysatorgemisch unter Berücksichtigung der Gesamtheit der beiden organischen Derivate des Zinns von 0,1 bis 99,9, vorzugsweise von 10 bis 90 Gew.-% des Diorganozinn-bis(β-diketonats) und von 99,9 bis 0,1, vorzugsweise von 90 bis 10 Gew.-% des organischen Derivats des zinns mit der Wertigkeit 4 frei von β-Diketonatofunktion enthält.

3. Organopolysiloxanzusammensetzung gemäß Anspruch 1 oder 2, dadurch gekennzeichnet, daß das Diorganozinn-bis(β-diketonat) der Formel:

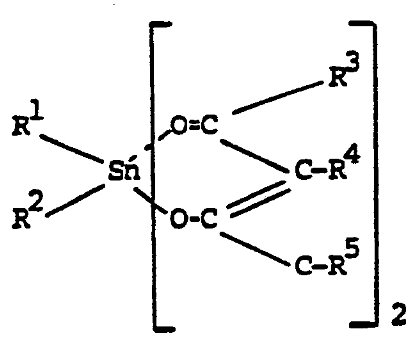

entspricht, worin:

$R^1$ und $R^2$, die identisch oder verschieden sind, organische $C_1$—$C_{12}$-Reste bedeuten,

$R^3$ und $R^5$, die identisch oder verschieden sind, die Bedeutung von $R^1$ und $R^2$ haben und außerdem Wasserstoffatome, Cyanoalkylreste mit $C_2$—$C_4$ im Alkylteil, Cyanoalkoxyreste mit $C_1$—$C_5$ im Alkylteil bedeuten,

$R^4$ ein Wasserstoffatom, einen $C_1$—$C_8$-Kohlenwasserstoffrest, der halogeniert ist oder nicht, bedeutet,

$R^4$ zusammen mit $R^5$ einen cyclischen $C_5$—$C_{12}$-Kohlenwasserstoffrest bedeutet, der substituiert durch Chlor-, Nitro- oder Cyanoreste ist oder nicht.

4. Organopolysiloxanzusammensetzung gemäß Anspruch 3, dadurch gekennzeichnet, daß $R_1$ und $R_2$ $C_1$—$C_{12}$-Alkylreste, die halogeniert oder nicht halogeniert sind, bedeuten.

5. Organopolysiloxanzusammensetzung gemäß Anspruch 4, dadurch gekennzeichnet, daß das Diorganozinn-bis(β-diketonat) ausgewählt ist unter den Produkten der Formeln:

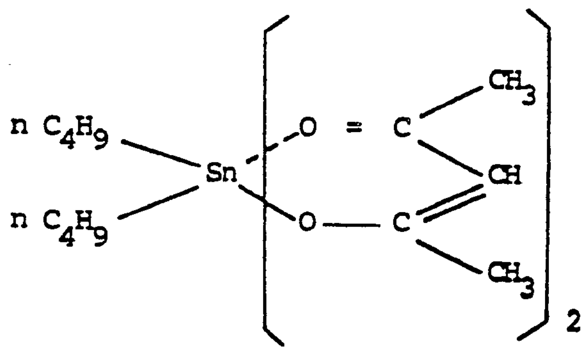

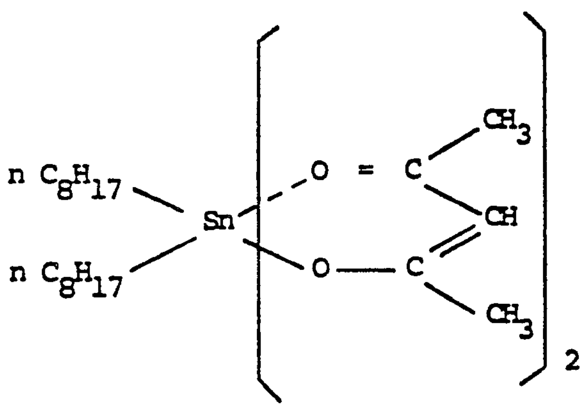

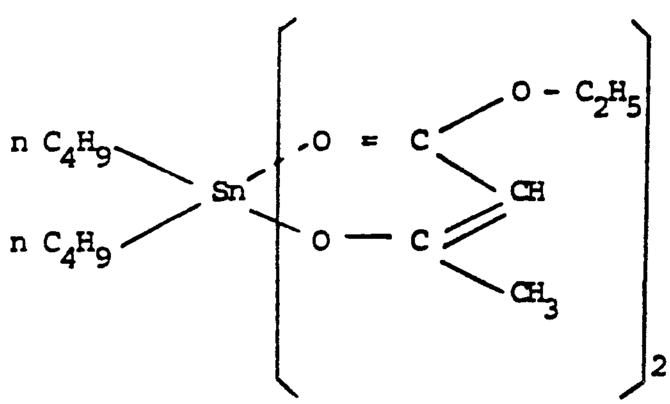

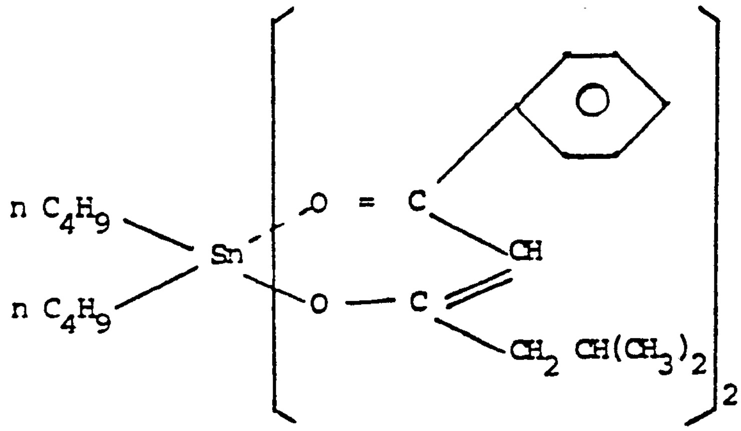

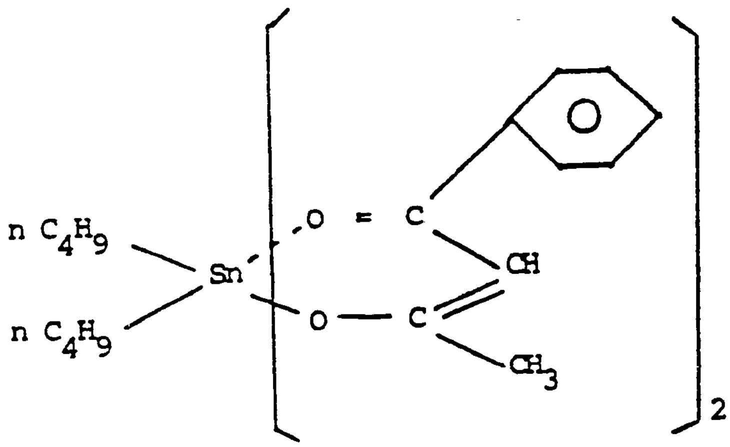

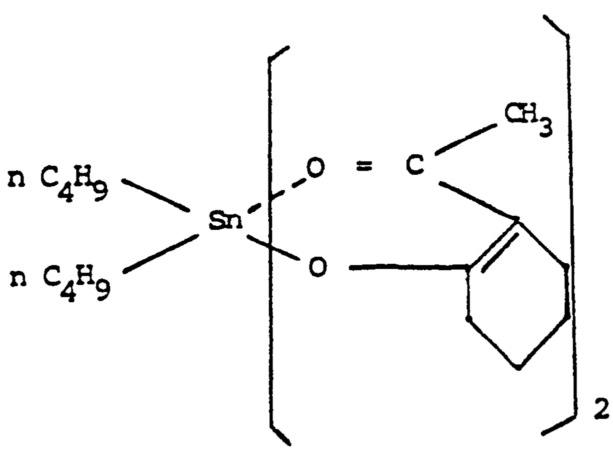

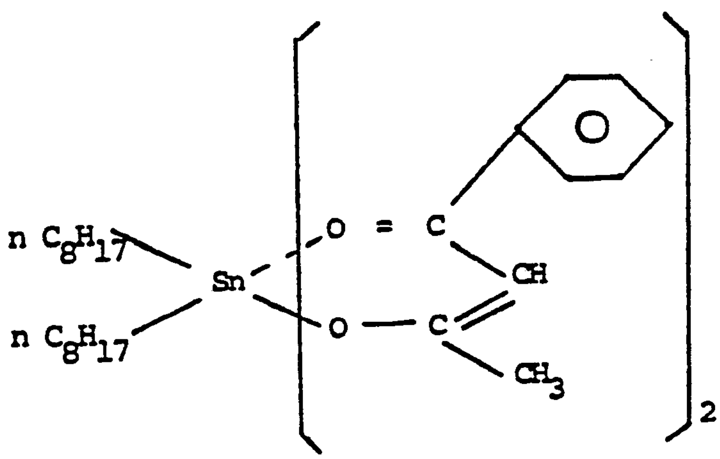

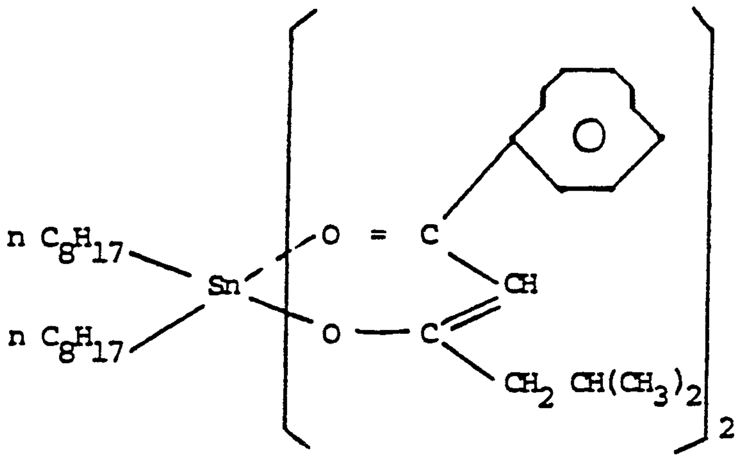

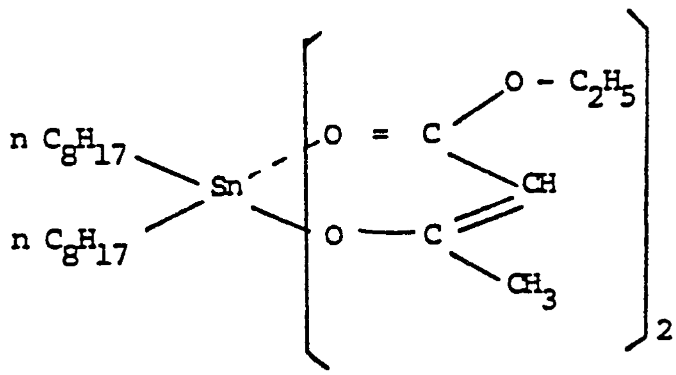

6. Zusammensetzung gemäß einem der Ansprüche 1 bis 5, dadurch gekennzeichnet, daß das organische Derivat des Zinns der Wertigkeit 4, frei von β-Diketonatofunktion, ausgewählt ist aus der Gruppe, die aus den Verbindungen der Formeln:

$A_2SnR^6_2$ , $R^6_2SnO$ , $AR^6_2SnOSnR^6_2A$ ,

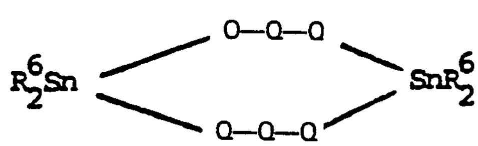

besteht, worin

$R^6$ einen halogenierten oder nicht halogenierten $C_1$—$C_{20}$-Kohlenwasserstoffrest bedeutet,

A einen organischen, anorganischen, siliciumorganischen Rest oder eine Polydiorganosiloxankette bedeutet, gebunden an das Zinnatom durch eine Sn—O— oder Sn—S—Bindung, ein Halogenatom, einen Hydroxylrest,

Q einen $C_2$—$C_{10}$-Alkylenrest bedeutet.

7. Zusammensetzung gemäß Anspruch 6, dadurch gekennzeichnet, daß das organische Derivat des Zinns der Wertigkeit 4, frei von β-Diketonatofunktion, ausgewählt ist aus der Gruppe bestehend aus Verbindungen der Formeln:

$$A_2SnR^6_2$$

$$R^6_2SnO$$

worin die Reste $R^6$ gerade oder verzweigte $C_1$—$C_{20}$-Alkylreste bedeuten, und die Reste A ausgewählt sind aus der Gruppe bestehend aus:

Monocarboxylatresten der Formel $R^7COO$, wobei $R^7$ ein $C_1$—$C_{20}$-Kohlenwasserstoffrest ist,

Alkoxyresten der Formel $R^8O$, wobei $R^8$ einen $C_1—C_8$-Kohlenwasserstoffrest bedeutet und Ketiminoxyresten der Formel

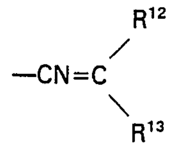

worin $R^{12}$ und $R^{13}$ $C_1—C_{10}$-Kohlenwasserstoffreste darstellen,

einem siliciumorganischen Rest oder einer kurzen Polydiorganosiloxankette $R_3{}^7SiO—(—R_2{}^7SiO—)_n—$, wobei $R_7$ ein $C_1—C_{20}$-Kohlenwasserstoffrest ist.

8. Zusammensetzung gemäß Anspruch 7, dadurch gekennzeichnet, daß das organische Derivat des Zinns der Wertigkeit 4, frei von β-Diketonatofunktion, ausgewählt ist unter D-n-butylzinn-dilaurat, Di-n-octylzinn-dilaurat, Di-n-butylzinn-diacetat, Di-n-octylzinn-diacetat, Di-n-butylzinn-di(2-ethyl)-hexanoat, Di-n-octylzinn-di(2-ethyl)-hexanoat, Di-n-butylzinn-diversat und Di-n-octylzinn-diversatat ist.

**Claims**

1. Organopolysiloxane composition comprising a base suitable for curing to a silicone elastomer, starting at room temperature, and a cure catalyst from the class of organic tin derivatives, characterized in that the catalyst is a mixture of a diorganotin bis-(β-diketonate) with an organic derivative of tin of valency IV, free from β-diketonato functional group, and having at least one tin atom, each tin atom bearing two organic radicals bonded by an Sn-C bond, the other two valencies being satisfied by means of radicals chosen from organic or inorganic radicals bonded by an SnO, SnS bond, by halogen atoms, by hydroxyl groups or by oxygen atoms.

2. Organopolisiloxane compositions according to Claim 1, characterized in that the catalyst mixture comprises, taking into account the totality of the two organic tin derivatives, from 0.1 to 99.9, preferably from 10 to 90% by weight of the diorganotin bis(β-diketonate) and from 99.9% to 0.1, preferably from 90 to 10% by weight of the organic derivative of tin of valency IV free from β-diketonato functional group.

3. Organopolysiloxane composition according to Claim 1 or 2, characterized in that the diorganotin bis(β-diketonate) corresponds to the formula:

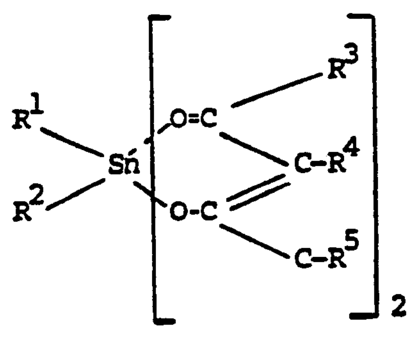

in which:

$R^1$ and $R^2$, which are identical or different, denote $C_1—C_{12}$ organic radicals,

$R^3$ and $R^5$, which are identical or different, have the meaning of $R^1$ and $R^2$ and additionally denote hydrogen atoms, cyanoalkyl radicals which have a $C_2—C_4$ alkyl part, and cyanoalkoxy radicals which have a $C_1—C_5$ alkoxy part,

$R^4$ denotes the hydrogen atom, or a $C_1—C_8$ hydrocarbon radical, halogenated or otherwise,

$R^4$ on coupling with $R^5$ denotes a $C_5—C_{12}$ cyclic hydrocarbon radical, substituted or otherwise by chloro, nitro or cyano radicals.

4. Organopolysiloxane composition according to Claim 3, characterized in that $R_1$ and $R_2$ denote $C_1—C_{12}$ alkyl radicals, halogenated or otherwise.

5. Organopolysiloxane composition according to Claim 4, characterized in that the diorganotin bis(β-diketonate) is chosen from the products of formulae:

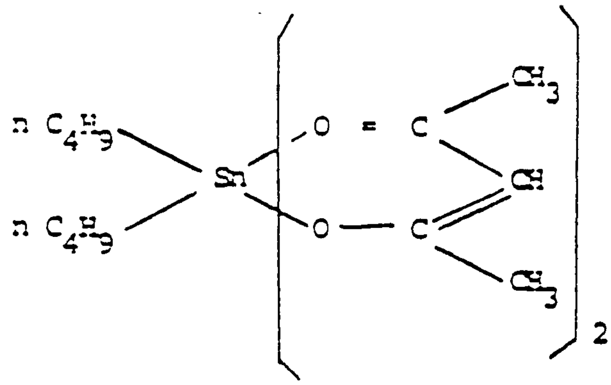

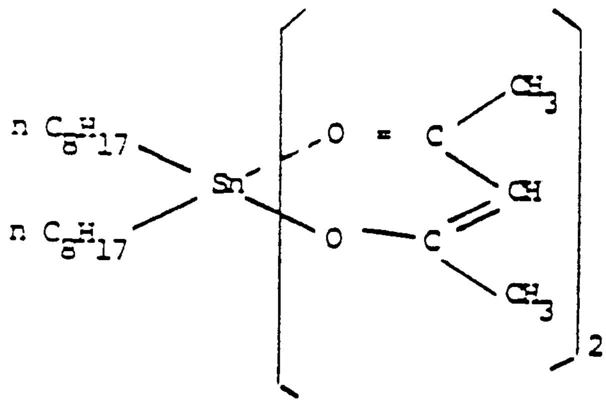

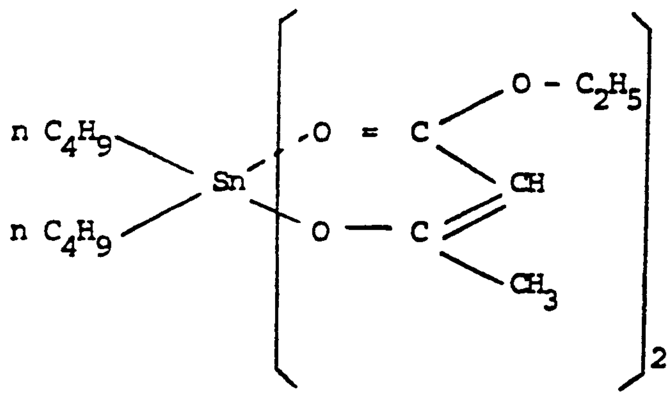

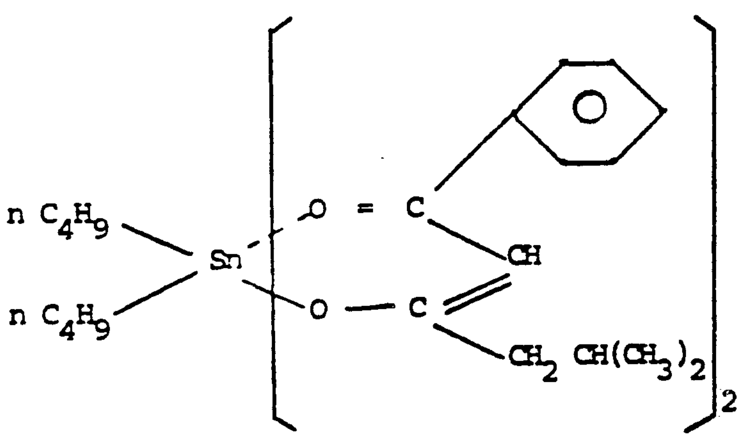

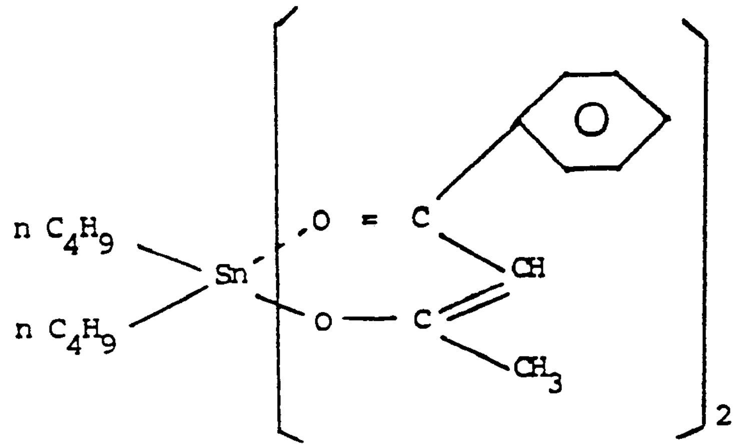

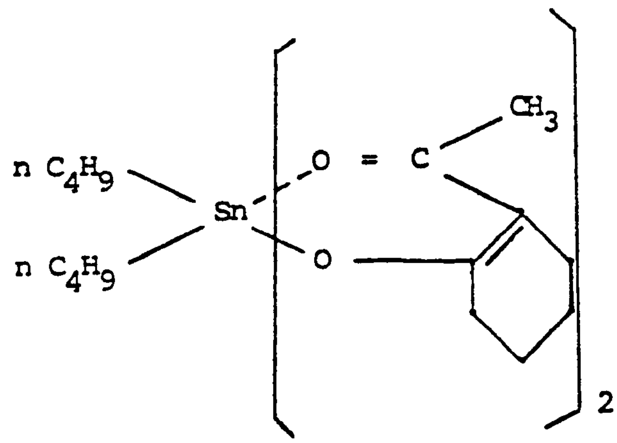

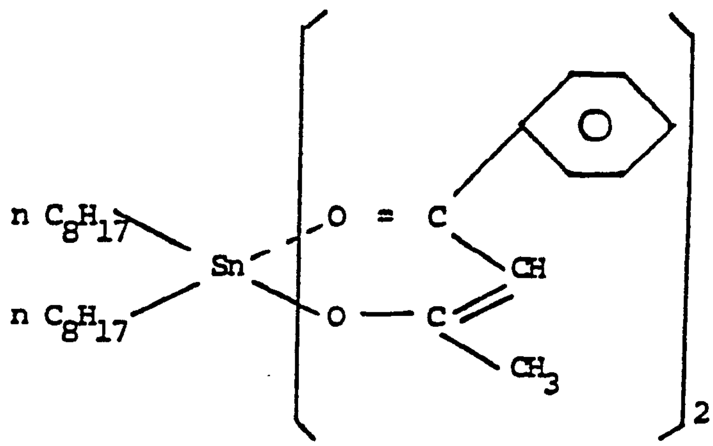

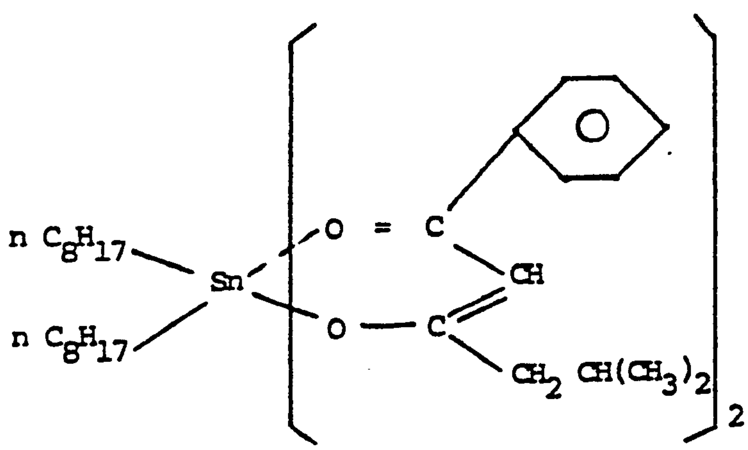

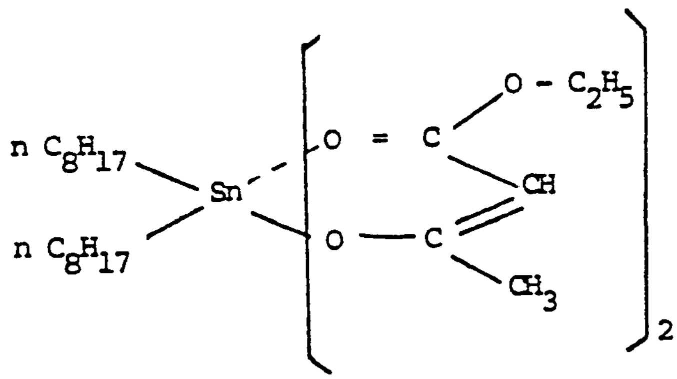

6. Composition according to any one of Claims 1 to 5, characterized in that the organic derivative of tin of valency IV, free from β-diketonato functional group, is chosen from the group consisting of the compounds of formulae:

$$A_2SnR^6_2 \quad , \quad R^6_2SnO \quad , \quad AR^6_2SnOSnR^6_2A \quad ,$$

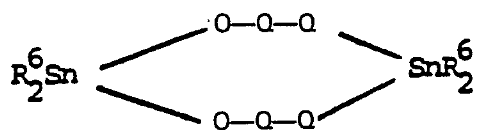

in which:

$R^6$ denotes a $C_1$—$C_{20}$ hydrocarbon radical, halogenated or otherwise,

A denotes an organic or inorganic radical, an organosilicon radical or a polydiorganosiloxane chain, bonded to the tin atom by an Sn—O or Sn—S bond,

a halogen atom, a hydroxyl radical,

Q denotes a $C_2$—$C_{10}$ alkylene radical.

7. Composition according to Claim 6, characterized in that the organic derivative of tin of valency IV free from β-diketano functional group is chosen from the group consisting of the compounds of formulae:

$$A_2SnR^6_2$$

$$'R^6_2SnO$$

in which the radicals $R^6$ denote $C_1$—$C_{20}$ linear or branched alkyl radicals, and the radicals A, are chosen from the group consisting of:

monocarboxylate radicals of formula $R^7COO$, $R^7$ being a $C_1$—$C_{20}$ hydrocarbon radical,

alkoxy radicals of formula $R^8O$ in which $R^8$ denotes a $C_1$—$C_8$ hydrocarbon radical, and

ketiminoxy radicals of formula

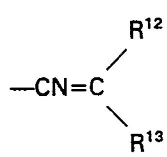

in which $R^{12}$ and $R^{13}$ denote $C_1$—$C_{10}$ hydrocarbon radicals,

an organosilicon radical or a polydiorganosiloxane short chain $R_3{}^7SiO$—(—$R_2{}^7SiO$—$)_n$—, $R_7$ being a $C_1$—$C_{20}$ hydrocarbon radical.

8. Composition according to Claim 7, characterized in that the organic derivative of tin of valency IV free from β-diketano functional group is chosen from di-n-butyltin dilaurate, di-n-octyltin dilaurate, di-n-butyltin diacetate, di-n-octyltin diacetate, di-n-butyltin di(2-ethyl)hexanoate, di-n-octyltin di(2-ethyl)hexanoate, di-n-butyltin diversate and di-n-octyltin diversatate.